(19) Europäisches Patentamt
European Patent Office
Office européen des brevets

(11) EP 2 659 480 B1

(12) **EUROPEAN PATENT SPECIFICATION**

(45) Date of publication and mention of the grant of the patent:
**27.07.2016 Bulletin 2016/30**

(21) Application number: **11805338.8**

(22) Date of filing: **15.12.2011**

(51) Int Cl.:
***G10H 1/00*** (2006.01) ***G06K 9/00*** (2006.01)
***G06F 17/30*** (2006.01) ***G06F 17/00*** (2006.01)
***H04R 29/00*** (2006.01) ***G10L 25/48*** (2013.01)

(86) International application number:
**PCT/US2011/065080**

(87) International publication number:
**WO 2012/091935 (05.07.2012 Gazette 2012/27)**

(54) **REPETITION DETECTION IN MEDIA DATA**

ERKENNUNG VON WIEDERHOLUNGEN BEI MEDIENDATEN

DÉTECTION DE RÉPÉTITIONS DANS DES DONNÉES MULTIMÉDIA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2010 US 201061428578 P**
**30.12.2010 US 201061428588 P**
**30.12.2010 US 201061428554 P**
**12.12.2011 US 201161569591 P**

(43) Date of publication of application:
**06.11.2013 Bulletin 2013/45**

(73) Proprietors:
- **Dolby Laboratories Licensing Corporation**
  **San Francisco, CA 94103-4813 (US)**
- **Dolby International AB**
  **1101 CN Amsterdam Zuid-Oost (NL)**

(72) Inventors:
- **RESCH, Barbara**
  **113 30 Stockholm (SE)**
- **RADHAKRISHNAN, Regunathan**
  **Foster City, California 94404 (US)**
- **BISWAS, Arijit**
  **90429 Nürnberg (DE)**
- **ENGDEGARD, Jonas**
  **112 67 Stockholm (SE)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
**EP-A1- 2 093 753** **US-A1- 2003 101 144**

- **GOTO M: "A Chorus Section Detection Method for Musical Audio Signals and Its Application to a Music Listening Station", IEEE TRANSACTIONS ON AUDIO, SPEECH AND LANGUAGE PROCESSING, IEEE SERVICE CENTER, NEW YORK, NY, USA, vol. 14, no. 5, 1 September 2006 (2006-09-01), pages 1783-1794, XP002473759, ISSN: 1558-7916, DOI: 10.1109/TSA.2005.863204**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 659 480 B1

## Description

CROSS-REFERENCE TO RELATED APPLICATIONS

This application claims priority to United States Patent Provisional Application Nos. 61/428,578, filed 30 December 2010, 61/428,588, filed 30 December 2010, 61/428,554, filed 30 December 2010, and 61/569,591, filed 12 December 2011.

TECHNOLOGY

The present invention relates generally to media, and in particular, to detecting the time-wise position of a representative segment in media data.

BACKGROUND

Media data may comprise representative segments that are capable of making lasting impressions on listeners or viewers. For example, most popular songs follow a specific structure that alternates between a verse section and a chorus section. Usually, the chorus section is the most repeating section in a song and also the "catchy" part of a song. The position of chorus sections typically relates to the underlying song structure, and may be used to facilitate an end-user to browse a song collection.

Thus, on the encoding side, the position of a representative segment such as a chorus section may be identified in media data such as a song, and may be associated with the encoded bitstream of the song as metadata. On the decoding side, the metadata enables the end-user to start the playback at the position of the chorus section. When a collection of media data such as a song collection at a store is being browsed, chorus playback facilitates instant recognition and identification of known songs and fast assessment of liking or disliking for unknown songs in a song collection.

In a "clustering approach" (or a state approach), a song may be segmented into different sections using clustering techniques. The underlying assumption is that the different sections (such as verse, chorus, etc.) of a song share certain properties that discriminate one section from the other sections or other parts of the song.

In a "pattern matching approach" (or a sequence approach), it is assumed that a chorus is a repetitive section in a song. Repetitive sections may be identified by matching different sections of the song with one another.

Both "the clustering approach" and "the pattern matching approach" require computing a distance matrix from an input audio clip. In order to do so, the input audio clip is divided into N frames; features are extracted from each of the frames. Then, a distance is computed between every pair of frames among the total number of pairs formed between any two of the N frames of the input audio clip. The derivation of this matrix is computationally expensive and requires high memory usage, because a distance needs to be computed for each and every one of all the combinations (which means an order of magnitude of NxN times, where N is the number of frames in a song or an input audio clip therein).

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

The International Search Report issued in connection with the present document cited, for technical background, the European Patent Application published under number EP 2 093 753 A1. Said European Patent Application discloses that a character value of a sound signal is extracted for each unit portion, and degrees of similarity between the character values of the individual unit portions are calculated and arranged in a matrix configuration. The degree of similarity matrix has arranged in each column the degrees of similarity acquired by comparing, for each of the unit portions, the sound signal and a delayed sound signal obtained by delaying the sound signal by a time difference equal to an integral multiple of a time length of the unit portion, and it has a plurality of the columns in association with different time differences. A reference matrix is generated which has predetermined reference values arranged in columns associated with positions of the time differences where the identified peaks are located. A loop region in the sound signal is identified by collating the reference matrix with the degree of similarity matrix.

BRIEF DESCRIPTION OF DRAWINGS

The present invention is illustrated by way of example, and not by way of limitation, in the figures of the accompanying drawings and in which like reference numerals refer to similar elements and in which:

FIG. 1 depicts an example basic block diagram of a media processing system, according to possible embodiments of the present invention;

FIG. 3 illustrates an example distance matrix, in accordance with possible embodiments of the present invention;

FIG. 4 illustrates example generation of a coarse spectrogram, according to possible embodiments of the present invention;

FIG. 5 illustrates an example helix of pitches, according to possible embodiments of the present invention;

FIG. 6 illustrates an example frequency spectrum, according to possible embodiments of the present invention;

FIG. 7 illustrates an example comb pattern to extract an example chroma, according to possible embodiments of the present invention;

FIG. 8 illustrates an example operation to multiply a frame's spectrum with a comb pattern, according to possible embodiments of the present invention;

FIG. 9 illustrates a first example weighting matrix relating to a chromagram computed on a restricted frequency range, according to possible embodiments of the present invention;

FIG. 10 illustrates a second example weighting matrix relating to a chromagram computed on a restricted frequency range, according to possible embodiments of the present invention;

FIG. 11 illustrates a third example weighting matrix relating to a chromagram computed on a restricted frequency range, according to possible embodiments of the present invention;

FIG. 12 illustrates an example chromagram plot associated with example media data in the form of a piano signal (with musical notes of gradually increasing octaves) using a perceptually motivated BPF, according to possible embodiments of the present invention;

FIG. 13 illustrates an example chromagram plot associated with the piano signal as shown in FIG. 12 but using the Gaussian weighting, according to possible embodiments of the present invention;

FIG. 14 illustrates an example detailed block diagram of a media processing system, according to possible embodiments of the present invention;

FIG. 15 illustrates example fingerprints comprising a query sequence of fingerprints, according to possible embodiments of the present invention;

FIG. 16 illustrates an example histogram of offset values, according to possible embodiments of the present invention;

FIG. 17 illustrates an example feature distance matrix (chroma distance matrix), according to possible embodiments of the present invention;

FIG. 18 illustrates example chroma distance values for a row of a similarity matrix, smoothed distance values and resulting seed time point for scene change detection, according to possible embodiments of the present invention;

FIG. 19A and FIG. 19B illustrate example process flows according to possible embodiments of the present invention; and

FIG. 20 illustrates an example hardware platform on which a computer or a computing device as described herein may be implemented, according a possible embodiment of the present invention.

DESCRIPTION OF EXAMPLE POSSIBLE EMBODIMENTS

Example possible embodiments, which relate to repetition detection in media data, are described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily including, obscuring, or obfuscating the present invention.

Example embodiments are described herein according to the following outline:

1. GENERAL OVERVIEW
2. FRAMEWORK FOR FEATURE EXTRACTION
3. SPECTRUM BASED FINGERPRINTS
4. CHROMA FEATURES
5. OTHER FEATURES

    5.1 MEL-FREQUENCY CEPSTRAL COEFFICIENTS (MFCC)
    5.2 RHYTHM FEATURES

6. DETECTION OF REPETITIVE PARTS

    6.1. FINGERPRINT MATCHING
    6.2. DETECT SIGNIFICANT (CANDIDATE) OFFSETS

6.3. CHROMA DISTANCE ANALYSIS
6.4. COMPUTE SIMILARITY ROWS

7. REFINEMENT USING SCENE CHANGE DETECTION
8. RANKING
9. OTHER APPLICATIONS
10. EXAMPLE PROCESS FLOW

10.1. EXAMPLE REPETITION DETECTION PROCESS FLOW - FINGERPRINT MATCHING AND SEARCHING
10.2. EXAMPLE REPETITION DETECTION PROCESS FLOW - HYBRID APPROACH

11. IMPLEMENTATION MECHANISMS - HARDWARE OVERVIEW
12. EQUIVALENTS, EXTENSIONS, ALTERNATIVES AND MISCELLANEOUS

1. GENERAL OVERVIEW

This overview presents a basic description of some aspects of a possible embodiment of the present invention. It should be noted that this overview is not an extensive or exhaustive summary of aspects of the possible embodiment. Moreover, it should be noted that this overview is not intended to be understood as identifying any particularly significant aspects or elements of the possible embodiment, nor as delineating any scope of the possible embodiment in particular, nor the invention in general. This overview merely presents some concepts that relate to the example possible embodiment in a condensed and simplified format, and should be understood as merely a conceptual prelude to a more detailed description of example possible embodiments that follows below.

As described herein, media data may comprise, but are not limited to, one or more of: songs, music compositions, scores, recordings, poems, audiovisual works, movies, or multimedia presentations. In various embodiment, the media data may be derived from one or more of: audio files, media database records, network streaming applications, media applets, media applications, media data bitstreams, media data containers, over-the-air broadcast media signals, storage media, cable signals, or satellite signals.

Media features of many different types may be extractable from the media data, capturing structural properties, tonality including harmony and melody, timbre, rhythm, loudness, stereo mix, or a quantity of sound sources of the media data. Features extractable from media data as described herein may relate to any of a multitude of media standards, a tuning system of 12 equal temperaments or a different tuning system other than a tuning system of 12 equal temperaments.

One or more of these types of media features may be used to generate a digital representation for the media data. For example, media features of a type that captures tonality, timbre, or both tonality and timbre of the media data may be extracted, and used to generate a full digital representation, for example, in time domain or frequency domain, for the media data. The full digital representation may comprise a total of N frames. Examples of a digital representation may include, but are not limited to, those of fast Fourier transforms (FFTs), digital Fourier transforms (DFTs), short time Fourier transforms (STFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients.

Under some techniques, an NxN distance matrix may be calculated to determine whether, and wherein in the media data, a particular segment with certain representative characteristics exists in the media data. Examples of representative characteristics may include, but are not limited to, certain media features such as absence or presence of voice, repetition characteristics such as the most repeated or least repeated, etc.

In sharp contrast, under techniques as described herein, the digital representation may be reduced to fingerprints first. As used herein, fingerprints may be of a data volume several magnitudes smaller than that of the digital representation from which the fingerprints were derived and may be efficiently computed, searched, and compared.

Under techniques as described herein, a much optimized searching and matching step is used to quickly identify, for a query sequence of fingerprints, a set of offset values (or simply offsets) at which segments with certain representative characteristics are likely to repeat in the media data.

In some embodiments, some, or all, of the entire time duration of the media data may be divided into a plurality of time-wise sections each of which begins at a time point. A query sequence at a particular query time point may be formed by the sequence of fingerprints in one of the plurality of sections that begins at the particular time point - which may be called the query time point for the sequence of fingerprints.

A dynamic database of fingerprints may be used to store fingerprints of the media data to be compared with the query sequence. In some possible embodiments, the dynamic database of fingerprints is constructed in such a way that the fingerprints in the query sequence and additionally and/or optionally some fingerprints in the vicinity of the query sequence are excluded from the dynamic database.

A simple linear search and comparison operation may be used to determine all repeating or similar sequences of fingerprints in the dynamic database relative to the query sequence. These steps of setting a query sequence of fingerprints, constructing a dynamic database of fingerprints, and performing a linear search and comparison operation of the query sequence for similar or matched sequences in the media data may be repeated for all the time points. For each query time point (tq), we record the time point ($t_m$) at which the best matching sequence was found. We compute an offset value equal to ($t_m$-tq) which represents the time difference between the query point and its corresponding matching sequence in the database. As a result, a set of offset values that correspond to each of the query sequences may be established for the media data.

From this set of offset values, significant offset values, or a subset of offset values, may be further selected from the set of offset values based on one or more selection criteria. In an example, the one or more selection criteria may be relating to a frequency of occurrences of the offset values. The offset values associated with a frequency of occurrence that exceeds a certain threshold may be included in the subset of offset values - which may be called significant offset values. In some embodiments, the significant offset values may be identified using one or more histograms that represent frequencies of occurrences of the offset values.

Under the techniques described herein, feature-based comparisons or distance computations may be performed between features at a time difference equal to the significant offset values only. The whole distance matrix using N frames that cover the entire time duration of the media data as required in the existing techniques may be avoided under techniques as described herein. In some possible embodiment, the feature comparison at the significant offset values may further be performed on a restricted time range comprising time positions of time points (e.g., tm and tq) from fingerprint analysis.

In some possible embodiments, the feature-based comparisons or distance computations between features with time difference equal to the significant offset values as described herein may be based on a type of feature that is the same as the type that is used to generate the previously mentioned fingerprints. Alternatively and/or optionally, these feature-based comparisons or distance computations may be based on a type of feature that is NOT the same as the type of feature that was used to generate the previously mentioned fingerprints.

In some possible embodiments, the feature-based comparisons or distance computations between features with time difference equal to the significant offset values as described herein may produce similarity or dissimilarity values relating to one or more of Euclidean distances of vectors, mean squared errors, bit error rates, auto-correlation based measures, or Hamming distances. In some possible embodiments, filters may be applied to smooth the similarity or dissimilarity values. Examples of such filters may be, but are not limited to, a Butterworth lowpass filter, a moving average filter, etc.

In some possible embodiments, the filtered similarity or dissimilarity values may be used to identify a set of seed time points for each of the significant offset values. A seed time point, for example, may correspond to a local minimum or maximum in the filtered values.

Benefits of the present invention include, but are not limited to, identifying a chorus section, or a brief section that may be suitable for replaying or previewing when a large section of songs is being browsed, a ring tone, etc. To play any of one or more representative segments in media data such as a song, the locations of one or more representative segments in the media, for example, may be encoded by a media generator in a media data bitstream in the encoding stage. The media data bitstream may then be decoded by a media data player to recover the locations of the representative segments and to play any of the representative segments.

In some possible embodiments, mechanisms as described herein form a part of a media processing system, including but not limited to: a handheld device, game machine, television, laptop computer, netbook computer, cellular radiotelephone, electronic book reader, point of sale terminal, desktop computer, computer workstation, computer kiosk, or various other kinds of terminals and media processing units.

Various modifications to the preferred embodiments and the generic principles and features described herein will be readily apparent to those skilled in the art. Thus, the disclosure is not intended to be limited to the embodiments shown, but is to be accorded the widest scope consistent with the principles and features described herein.

## 2. FRAMEWORK FOR FEATURE EXTRACTION

In some possible embodiments, a media processing system herein may contain four major components as shown in FIG. 1. A feature-extraction component may extract features of various types from media data such as a song. A repetition detection component may find time-wise sections of the media data that are repetitive, for example, based on certain characteristics of the media data such as the melody, harmonies, lyrics, timbre of the song in these sections as represented in the extracted features of the media data.

In some possible embodiments, the repetitive segments may be subjected to a refinement procedure performed by a scene change detection component, which finds the correct start and end time points that delineate segments encompassing selected repetitive sections. These correct start and end time points may comprise beginning and ending scene change points of one or more scenes possessing distinct characteristics in the media data. A pair of a beginning scene change point and an ending scene change point may delineate a candidate representative segment.

A ranking algorithm performed by a ranking component may be applied for the purpose of selecting a representative segment from all the candidate representative segments. In a particular embodiment, the representative segment selected may be the chorus of the song.

In some possible embodiments, a media processing system as described herein may be configured to perform a combination of fingerprint matching and chroma distance analyses. Under the techniques as described herein, the system may operate with high performance at a relatively low complexity to process a large amount of media data. The fingerprint matching enables fast and low-complexity searches for the best matching segments that are repetitive in the media data. In these embodiments, a set of offset values at which repetitions occur is identified. Then, a more accurate chroma distance analysis is applied only at those offsets. Relative to a same time interval of the media data, the chroma distance analysis may be more reliable and accurate than the fingerprint matching analysis but at the expense of higher complexity than that of the fingerprint matching analysis. The advantage of the combined/hybrid approach is that since the chroma distance analysis is only applied to certain offsets in the media data, the computational complexity and memory usage decreases drastically as compared with applying the chroma distance analysis for all possible offsets on the whole time duration of the media data.

As mentioned, some repetition detection systems compute a full distance matrix, which contains the distance between each and every one of all combinations formed by any two of all N frames of media data. The computation of the full distance matrix may be computationally expensive and require high memory usage. FIG. 2 depicts example media data such as a song having an offset as shown between the first and second chorus sections. FIG. 3 shows an example distance matrix with two dimensions, time and offset, for distance computation. The offset denotes the time-lag between two frames from which a dissimilarity value (or a distance) relating to a features (or similarity) is computed. Repetitive sections are represented as horizontal dark lines, corresponding to a low distance of a section of successive frames to another section of successive frames that are a certain offset apart.

Under techniques as described herein, the computation of a full distance matrix may be avoided. Instead, fingerprint matching data may be analyzed to provide a set of significant offsets at which repetitions occur. Thus, distance computations between chroma features that are separated by an offset value that is not equal to one of the significant offsets can be avoided. In some possible embodiment, the feature comparison at the significant offset values may further be performed on a restricted time range comprising time positions of time points (tm and tq) from fingerprint analysis. As a result, even if a distance matrix is used under techniques as described herein, such a distance matrix may comprise only a few rows and columns for which distances are to be computed, relative to the full distance matrix under other techniques.

## 3. SPECTRUM BASED FINGERPRINTS

The goal of fingerprint extraction is to create a compact bitstream representation that can serve as an identifier for an underlying section of the media data. In general, for the purpose of detecting malicious tempering of media data, fingerprints may be designed in such a way as to possess robustness against a variety of signal processing/manipulation operations including coding, Dynamic Range Compression (DRC), equalization, etc. However, for the purpose of finding repeating sections in media data as described herein, the robustness requirements of fingerprints may be relaxed, since the matching of the fingerprints occurs within the same song. Malicious attacks that must be dealt with by a typical fingerprinting system may be absent or relatively rare in the media data as described herein.

Furthermore, fingerprint extraction herein may be based on a coarse spectrogram representation. For example, in embodiments in which the media data is an audio signal, the audio signal may be down-mixed to a mono signal and may additionally and/or optionally be down sampled to 16 kHz. In some embodiments, the media data such as the audio signal may be processed into, but is not limited to, a mono signal, and may further be divided into overlapping chunks. A spectrogram may be created from each of the overlapping chunks. A coarse spectrogram may be created by averaging along both time and frequency. The foregoing operation may provide robustness against relatively small changes in the spectrogram along time and frequency. It should be noted that, in some possible embodiments, the coarse spectrogram herein may also be chosen in a way to emphasize certain parts of a spectrum more than other parts of the spectrum.

FIG. 4 illustrates example generation of a coarse spectrogram according to possible embodiments of the present invention. The (input) media data (e.g., a song) is first divided into chunks of duration $T_{ch}$ = 2 seconds with a step size of $T_o$ = 16 ms. For each chunk of audio data ($X_{ch}$), a spectrogram may be computed with a certain time resolution (e.g., 128 samples or 8 ms) and frequency resolution (256-sample FFT). The computed spectrogram S may be tiled with time-frequency blocks. The magnitude of the spectrum within each of the time-frequency blocks may be averaged to obtain a coarse representation Q of the spectrogram S. The coarse representation Q of S may be obtained by averaging the magnitude of frequency coefficients in time-frequency blocks of size $W_f \times W_t$. Here, $W_f$ is the size of block along frequency

and $W_t$ is the size of block along time. Let F be the number of blocks along frequency axis and T be the number of blocks along time axis and hence Q is of size (F*T). Q may be computed in expression (1) given below:

$$Q(k,l) = \frac{1}{W_f * W_t} \sum_{i=(k-1)W_f}^{kW_f} \sum_{j=(l-1)W_t}^{lW_t} S(i,j)$$

$$k = 1, 2...F; l = 1, 2...T$$

Here, i and j represent the indices of frequency and time in the spectrogram and k and 1 represent the indices of the time-frequency blocks in which the averaging operation is performed. In some possible embodiments, F may be a positive integer (e.g., 5, 10, 15, 20, etc.), while T may be a positive integer (e.g., 5, 10, 15, 20, etc.).

In some possible embodiments, a low-dimensional representation of the coarse representation (Q) of spectrogram of the chunk may be created by projecting the spectrogram onto pseudo-random vectors. The pseudo-random vectors may be thought of as basis vectors. A number K of pseudo-random vectors may be generated, each of which may be with the same dimensions as the matrix Q (F xT). The matrix entries may be uniformly distributed random variables in [0, 1]. The state of the random number generator may be set based on a key. Let the pseudo-random vectors be denoted as $P_1$ $P_2$, ..., $P_K$, each of dimension (F x T). The mean of each matrix $P_i$ may be computed. Each matrix element in $P_i$ (i goes from 1 to K) may be subtracted with the mean of matrix $P_i$. Then, the matrix Q may be projected onto these K random vectors as shown below:

$$H_k = \sum_{i=1}^{M} \sum_{j=1}^{N} Q(i,j) * P_k(i,j)$$

Here $H_k$ is the projection of the matrix Q onto the random vector $P_k$. Using the median of these projections ($H_k$, k=1, 2, ...K) as a threshold, a number K of hash bits for the matrix Q may be generated. For example, a hash bit '1' may be generated for $k^{th}$ hash bit if the projection $H_k$ is greater than the threshold. Otherwise, a hash bit of '0' if not. In some possible embodiments, K may be a positive integer such as 8, 16, 24, 32, etc. In an example, a fingerprint of 24 hash bits as described herein may be created for every 16 ms of audio data. A sequence of fingerprints comprising these 24-bit codewords may be used as an identifier for that particular chunk of audio that the sequence of fingerprints represents. In a possible embodiment, the complexity of fingerprint extraction as described herein may be about 2.58 MIPS.

A coarse representation Q herein has been described as a matrix derived from FFT coefficients. It should be noted that this is for illustration purposes only. Other ways of obtaining a representation in various granularities may be used. For example, different representations derived from fast Fourier transforms (FFTs), digital Fourier transforms (DFTs), short time Fourier transforms (STFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients, chroma features, or other approaches may be used to derive codewords, hash bits, fingerprints, and sequences of fingerprints for chunks of the media data.

## 4. CHROMA FEATURES

A chromagram may be defined as an n-dimensional chroma vector. For example, for media data in a tuning system of 12 equal temperaments, a chromagram may be defined as a 12-dimensional chroma vector in which each dimension corresponds to the intensity (or alternatively magnitude) of a semitone class (chroma). Different dimensionalities of chroma vectors may be defined for other tuning systems. The chromagram may be obtained by mapping and folding an audio spectrum into a single octave. The chroma vector represents a magnitude distribution over chromas that may be discretized into 12 pitch classes within an octave. Chroma vectors capture melodic and harmonic content of an audio signal and may be less sensitive to changes in timbre than the spectrograms as discussed above in connection with fingerprints that were used for determining repetitive or similar sections.

Chroma features may be visualized by projecting or folding on a helix of pitches as illustrated in FIG. 5. The term "chroma" refers to the position of a musical pitch within a particular octave; the particular octave may correspond to a cycle of the helix of pitches, as viewed from sideways in FIG. 5. Essentially, a chroma refers to a position on the circumference of the helix as seen from directly above in FIG. 5, without regard to heights of octaves on the helix of FIG. 5. The term "height", on the other hand, refers to a vertical position on the circumference of the helix as seen from the side in FIG. 5. The vertical position as indicated by a specific height corresponds to a position in a specific octave of the specific height.

The presence of a musical note may be associated with the presence of a comb-like pattern in the frequency domain. This pattern may be composed of lobes approximately at the positions corresponding to the multiples of the fundamental frequency of an analyzed tone. These lobes are precisely the information which may be contained in the chroma vectors.

In some possible embodiments, the content of the magnitude spectrum at a specific chroma may be filtered out using a band-pass filter (BPF). The magnitude spectrum may be multiplied with a BPF (e.g., with a Hann window function). The center frequencies of the BPF as well as the width may be determined by the specific chroma and a number of height values. The window of the BPF may be centered at a Shepard's frequency as a function of both chroma and height. An independent variable in the magnitude spectrum may be frequency in Hz, which may be converted to cents (e.g., 100 cents equals to a half-tone). The fact that the width of the BPF is chroma specific stems from the fact that musical notes (or chromas as projected onto a particular octave of the helix of FIG. 5) are not linearly spaced in frequency, but logarithmically. Higher pitched notes (or chromas) are further apart from each other in the spectrum than lower pitched notes, so the frequency intervals between notes at higher octaves are wider than those at lower octaves. While the human ear is able to perceive very small differences in pitch at low frequencies, the human ear is only able to perceive relatively significant changes in pitch at high frequencies. For these reasons related to human perception, the BPF may be selected to be of a relatively wide window and of a relatively large magnitude at relatively high frequencies. Thus, in some possible embodiments, these BPF filters may be perceptually motivated.

A chromagram may be computed by a short-time-fourier-transformation (STFT) with a 4096-sample Hann window. In some possible embodiments, a fast-fourier-transform (FFT) may be used to perform the calculations; a FFT frame may be shifted by 1024 samples, while a discrete time step (e.g., l frame shift) may be 46.4 (or simply denoted as 46 herein) milliseconds (ms).

First, the frequency spectrum (as illustrated in FIG. 6) of a 46 ms frame may be computed. Second, the presence of a musical note may be associated with a comb pattern in the frequency spectrum, composed of lobes located at the positions of the various octaves of the given note. The comb pattern may be used to extract, e.g., a chroma D as shown in FIG. 7. The peaks of the comb pattern may be at 147, 294, 588, 1175, 2350, and 4699 Hz.

Third, to extract the chroma D from a given frame of a song, the frame's spectrum may be multiplied with the above comb pattern. The result of the multiplication is illustrated in FIG. 8, and represents all the spectral content needed for the calculation of the chroma D in the chroma vector of this frame. The magnitude of this element is then simply a summation of the spectrum along the frequency axis.

Fourth, to calculate the remaining 11 chromas the system herein may generate the appropriate comb patterns for each of the chromas, and the same process is repeated on the original spectrum.

In some possible embodiments, a chromagram may be computed using Gaussian weighting (on a log-frequency axis; which may, but is not limited to, be normalized). The Gaussian weighting may be centered at a log-frequency point, denoted as a center frequency "f_ctr", on the log-frequency axis. The center frequency "f_ctr" may be set to a value of ctroct. (in units of octaves or cents/1200, with the referential origin at A0), which corresponds to a frequency of 27.5*(2^ctroct) in units of Hz. The Gaussian weighting may be set with a Gaussian half-width of f_sd, which may be set to a value of octwidth in units of octaves. For example, the magnitude of the Gaussian weighting drops to exp(-0.5) at a factor of 2^octwidth above and below the center frequency f_ctr. In other words, in some possible embodiments, instead of using individual perceptually motivated BPFs as previously described, a single Gaussian weighting filter may be used.

Thus, for ctroct = 5.0 and octwidth = 1.0, the peak of the Gaussian weighting is at 880 Hz, and the weighting falls to approximately 0.6 at 440 Hz and 1760 Hz. In various possible embodiments, the parameters of the Gaussian weighting may be preset, and additionally and/or optionally, configurable by a user manually and/or by a system automatically. In some possible embodiments, a default setting of ctroct = 5.1844 (which gives f_ctr = 1000 Hz) and octwidth = 1 may be present or configured. Thus, the peak of the Gaussian weighting for this example default setting is at 1000 Hz, and the weighting falls to approximately 0.6 at 500 and 2000 Hz.

Thus, in these embodiments, the chromagram herein may be computed on a rather restricted frequency range. This can be seen from the plots of a corresponding weighting matrix as illustrated in FIG. 9. If the f_sd of the Gaussian weighting is increased to 2 in units of octaves, the spread of the weighting for the Gaussian weighting is also increased. The plot of a corresponding weighting matrix looks as shown in FIG. 10. As a comparison, the weighting matrix looks as shown in FIG. 11 when operating with an f_sd having a value of 3 to 8 octaves.

FIG. 12 illustrates an example chromagram plot associated with example media data in the form of a piano signal (with musical notes of gradually increasing octaves) using a perceptually motivated BPF. In comparison, FIG. 13 illustrates an example chromagram plot associates with the same piano signal using the Gaussian weighting. The framing and shift is chosen to be exactly same for the purposes of making comparison between the two chromagram plots.

The patterns in both chromagram plots look similar. A perceptually motivated band-pass filter may provide better energy concentration and separation. This is visible for the lower notes, where the notes in the chromagram plot generated by the Gaussian weighting look hazier. While the different BPFs may impact chord recognition applications differently, a perceptually motivated filter brings little added benefits for segment (e.g., chorus) extraction.

In some possible embodiments, the chromagram and fingerprint extraction as described herein may operate on media data in the form of a 16-kHz sampled audio signal. Chromagram may be computed with STFT with a 3200-sample Hann window using FFT. A FFT frame may be shifted by 800 samples with a discrete time step (e.g., 1 frame shift) of 50 ms. It should be noted that other sampled audio signals may be processed by techniques herein. Furthermore, for the purpose of the present invention, a chromagram computed with a different transform, a different filter, a different window function, a different number of samples, a different frame shift, etc. is also within the scope of the present invention.

## 5. OTHER FEATURES

Techniques herein may use various features that are extracted from the media data such as MFCC, rhythm features, and energy described in this section. As previously noted, some, or all, of extracted features as described herein may also be applied to scene change detection. Additionally and/or optionally, some, or all, of these features may also be used by the ranking component as described herein.

### 5.1 MEL-FREQUENCY CEPSTRAL COEFFICIENTS (MFCC)

Mel-frequency Cepstral coefficients (MFCCs) aim at providing a compact representation of the spectral envelope of an audio signal. The MFCC features may provide a good description of the timbre and may also be used in musical applications of the techniques as described herein.

### 5.2 RHYTHM FEATURES

Some algorithmic details of computing the rhythmic features may be found in Hollosi, D., Biswas, A., "Complexity Scalable Perceptual Tempo Estimation from HE-AAC Encoded Music," in 128th AES Convention, London, UK, 22-25 May 2010. In some possible embodiments, perceptual tempo estimation from HE-AAC encoded music may be carried out based on modulation frequency. Techniques herein may include a perceptual tempo correction stage in which rhythmic features are used to correct octave errors. An example procedure for computing the rhythmic features may be described as follows.

In the first step, a power spectrum is calculated; a Mel-Scale transformation is then performed. This step accounts for the non-linear frequency perception of the human auditory system while reducing the number of spectral values to only a few Mel-Bands. Further reduction of the number of bands is achieved by applying a non-linear companding function, such that higher Mel-bands are mapped into single bands under the assumption that most of the rhythm information in the music signal is located in lower frequency regions. This step shares the Mel filter-bank used in the MFCC computation.

In the second step, a modulation spectrum is computed. This step extracts rhythm information from media data as described herein. The rhythm may be indicated by peaks at certain modulation frequencies in the modulation spectrum. In an example embodiment, to compute the modulation spectrum, the companded Mel power spectra may be segmented into time-wise chunks of 6s length with certain overlap over the time axis. The length of the time-wise chunks may be chosen from a trade-off between costs and benefits involving computational complexity to capture the "long-time rhythmic characteristics" of an audio signal. Subsequently, an FFT may be applied along the time-axis to obtain a joint-frequency (modulation spectrum: x-axis - modulation frequency and y-axis - companded Mel-bands) representation for each 6s chunk. By weighting the modulation spectrum along the modulation frequency axis with a perceptual weighting function obtained from analysis of large music datasets, very high and very low modulation frequencies may be suppressed (such that meaningful values for the perceptual tempo correction stage may be selected).

In the third step, the rhythmic features may then be extracted from the modulation spectrum. The rhythmic features that may be beneficial for scene-change detection are: rhythm strength, rhythm regularity, and bass-ness. Rhythm strength may be defined as the maximum of the modulation spectrum after summation over companded Mel-bands. Rhythm regularity may be defined as the mean of the modulation spectrum after normalization to one. Bass-ness may be defined as the sum of the values in the two lowest companded Mel-bands with a modulation frequency higher than one (1) Hz.

## 6. DETECTION OF REPETITIVE PARTS

In some possible embodiments, repetition detection (or detection of repetitive parts) as described herein may be based on both fingerprints and chroma features. In some possible embodiments, initially, fingerprint queries using a tree-based search may be performed, identifying the best match for each segment of the audio signal thereby giving rise to one or more best matches. Subsequently, the data from the best matches may be used to determine offset values where repetitions occur and the corresponding rows of a chroma distance matrix are computed and further analyzed. FIG. 14 depicts an example detailed block diagram of the system, and illustrates how the extracted features are processed to detect the repetitive sections.

6.1. FINGERPRINT MATCHING

In some possible embodiments, using techniques as described herein, the fingerprint matching block of FIG. 14 may quickly identify offset values or time lags at which repeating segments appear in media data such as an input song. In a possible embodiment, as illustrated in FIG. 15, for every 0.64s time increment (which begins at a start time point = 0 initially and thereafter increments by 0.64s) of the song, a sequence of 488 24-bit fingerprint codewords corresponding to an 8s time interval (beginning at the start time point of each 0.64s increment) of the song may be used as a query sequence of fingerprints. A matching algorithm may be used to find the best match for this query sequence comprising a number of fingerprint bits (e.g., 488 24-bit fingerprint codewords) in the rest of fingerprint bits (corresponding to the remaining time duration excluding the query sequence of fingerprints) of the song.

More specifically, in some possible embodiments, at a start time point (e.g., t = 0, 0.64s, 1.28s, ... etc.), a query sequence of fingerprint codewords covering an 8s interval (which starts from, e.g., t = 0, 0.64s, 1.28s, ..., etc.) of the song may be used to interrogate the rest of fingerprints in a dynamic database of fingerprints. The best matching sequence of bits may be found from this dynamic database of fingerprint bits that stores the remaining fingerprint bits of the song excluding certain portions of fingerprints of the song. An optimization may be made to increase the robustness in that the dynamic database of fingerprints may exclude a portion of fingerprints that corresponds to a certain time interval from the (current) start time point of the query sequence. This optimization can be applied when the assumption can be made that the segment to be detected is repeated after a certain minimum offset. The optimization avoids the detection of repetitions that occur with smaller offsets (e.g., musical patterns repeat with only a few seconds offset). For example, an optimization may be made so that the dynamic database of fingerprints may exclude a portion of fingerprints that corresponds to a (-20s) 19.2s time interval from the (current) start time point of the query sequence. When the next start time point, t = 0.64s, is set to be the current start time point, the fingerprints corresponding to 0.64s to 8.64s of the song may be used as a query. The dynamic database of fingerprints may now exclude the time interval of the song corresponding to (0.64s to 19.84s). In some possible embodiments, the portion of fingerprints corresponding to the time interval between the previous start time point and the current start time point (e.g., 0 to 0.64s) may be added to the dynamic database of fingerprints. At each current start time point, the dynamic database is thus updated and a search is performed to find the best matching sequence of bits for a query sequence of fingerprint bits starting from the current start time point. For each search, the following two results may be recorded:

- the offset at which the best matching section is found; and
- the hamming distance between the query sequence and the best matching section from the dynamic database.

In some possible embodiments, a search relating to a query sequence of fingerprints as described herein may be performed efficiently using a 256-ary tree data structure and may be able to find approximate nearest neighbors in high-dimensional binary spaces. The search may also be performed using other approximate nearest neighbor search algorithms such as LSH (Locality Sensitive Hashing), minHash, etc.

6.2. DETECT SIGNIFICANT (CANDIDATE) OFFSETS

The fingerprint matching block of FIG. 14 returns the offset value of the best-matching segment in a song for every 0.64s increment in the song. In some possible embodiments, the detect-significant-offsets block of FIG. 14 may be configured to determine a number of significant values by computing a histogram based on all offset values obtained in the fingerprint matching block of FIG. 14. FIG. 16 shows an example histogram of offset values. The significant offset values may be selected offset values for which there are a significant number of matches. The significant offset values may manifest as peaks in the histogram. In some possible embodiments, significant offset values are offset values with a significant number of matches. Peak detection may be based on adaptive threshold in the histogram; offset values comprising peaks above the threshold may be identified significant offset values. In some embodiments, neighboring (e.g., within a window of ~1 s) significant offsets may be merged.

6.3. CHROMA DISTANCE ANALYSIS

Once a number of significant offset values at which repetitive elements or sections in the media data (such as a song occur) is determined, these selected offset values may be used to compute selective rows of a feature distance matrix (e.g., features relating to structural properties, tonality including harmony and melody, timbre, rhythm, loudness, stereo mix, or a quantity of sound sources of corresponding sections in the media data) as follows:

$$D(i,o_k) = d(f(i),f(i+o_k))$$

*Here f(i)* represents a feature vector for media data frame i and *d()* is a distance measure used to compare two feature vectors. Here $o_k$ is the $k^{th}$ significant offset value. The computation of *D()* may be made for all N media frames against each of the selected offset value $o_k$. The number of selected offset values $o_k$ is associated with how frequent a representative segment repeats in the media data, and may not vary with how many (e.g., the number N) media frames one chooses to cover the media data. Thus, the complexity of computing *D()* for all the selected offset values $o_k$ against all the N media frames under the techniques herein is O(N). In comparison, the complexity of a full NxN distance matrix computation under other techniques would be $O(N^2)$. Additionally, the feature distance matrix under techniques described herein is much smaller than a full NxN distance matrix, requiring much less memory space to perform the computation.

In some embodiments, the features used to compute the feature distance matrix may be, but are not limited to, one or more of the following:

- features that represent timbre (e.g., MFCC);
- features that represent melody (e.g., chromagrams);
- features that represent rhythm; or
- fingerprints derived from the song during matching.

In some possible embodiments, techniques described herein use one or more suitable distance measures to compare the selected features for the feature distance matrix. In an example, if the system herein may use fingerprints to represent a selected media data frame i (which may be a frame at or near a significant offset time point), then a Hamming distance may be used as a distance measure to compute corresponding fingerprints in the selected media data frame i and a media data frame at an offset time point away.

In another example, in some possible embodiments, if a 12-dimensional chroma vector is used as a feature vector to compute the feature-distance matrix as described herein, then the feature distance may be determined as follows:

$$D(i,o_k) = d(\underline{c}(i),\underline{c}(i+o_k)) = \frac{\dfrac{\underline{c}(i)}{\max(\underline{c}(i))} - \dfrac{\underline{c}(i+o_k)}{\max(\underline{c}(i+o_k))}}{\sqrt{12}}$$

Where $\underline{c}(i)$ denotes the 12 dimensional chroma vector for frame *i* , and *d* () is a selected distance measure. The computed feature distance matrix (chroma distance matrix) is shown in FIG. 17.

## 6.4. COMPUTE SIMILARITY ROWS

In some possible embodiments, the resulting chroma distance (feature-distance) values may then be smoothed by the compute-similarity-row block of FIG. 14 with a filter such as a moving average filter of a certain time-wise length, e.g., 15 seconds. In some possible embodiments, the position of the minimum distance of the smoothed signal may be found as follows:

$$s(o_k) = \underset{over\ i}{argmin}(D(i,o_k))$$

The finding of the position of the minimum distance of the smoothed signal corresponds in this example to the detection of the position of the media segment of length 15 seconds that is most similar to another media segment of 15 seconds. The two resulting best matching segments are spaced with a given offset $o_k$. The position *s* may be used in the next stage of processing as a seed for the scene change detection. FIG. 18 shows example chroma distance values for a row of the similarity matrix, the smoothed distance and the resulting seed point for the scene change detection.

## 7. REFINEMENT USING SCENE CHANGE DETECTION

In some possible embodiments, a position in media data such as a song, after having been identified by a feature distance analysis such as a chroma distance analysis as the most likely inside a candidate representative segment with certain media characteristics may be used as a seed time point for scene change detection. Examples of media characteristics for the candidate representative segment may be repetition characteristics possessed by the candidate representative segment in order for the segment to be considered as a candidate for the chorus of the song; the repetition characteristics, for example, may be determined by the selective computations of the distance matrix as described above.

In some possible embodiments, the scene change detection block of FIG. 14 may be configured in a system herein to identify two scene changes (e.g., in audio) in the vicinity of the seed time point:

- a beginning scene change point to the left of the seed time point corresponding to the beginning of the representative segment;
- an ending scene change point to the right of the seed time point corresponding to the end of the representative segment.

## 8. RANKING

The ranking component of FIG. 14 may be given several candidate representative segments for possessing certain media characteristics (e.g., the chorus) as input signals and may select one of the candidate representative segments as the output of the signal, regarded as the representative segment (e.g., a detected chorus section). All candidates representative segments may be defined or delimited by their beginning and ending scene change points (e.g., as a result from the scene change detection described herein).

## 9. OTHER APPLICATIONS

Techniques as described herein may be used to detect chorus segments from music files. However, in general the techniques as described herein are useful in detecting any repeating segment in any audio file.

## 10. EXAMPLE PROCESS FLOW

FIG. 19A and FIG. 19B illustrate example process flows according to possible embodiments of the present invention. In some possible embodiments, one or more computing devices or components in a media processing system may perform one or more of these process flows.

### 10.1. EXAMPLE REPETITION DETECTION PROCESS FLOW - FINGERPRINT MATCHING AND SEARCHING

FIG. 19A illustrates an example repetition detection process flow using fingerprints. In block 1902, a media processing system extracts a set of fingerprints from media data (e.g., a song).

In block 1904, the media processing system selects, based on the set of fingerprints, a set of query sequences of fingerprints. Each individual query sequence of fingerprints in the set of query sequences may comprise a reduced representation of the media data for a time interval that begins at a query time.

In block 1906, the media processing system determines a set of matched sequences of fingerprints for the set of query sequences of fingerprints. As used herein, matched sequences include sequences of fingerprints that are similar to a query sequence of fingerprints based on distance-measure based values such as hamming distances. Each individual query sequence in the set of query sequences may correspond to zero or more matched sequences of fingerprints in the set of matched sequences of fingerprints.

In block 1908, the media processing system identifies a set of offset values based on the time position of the best matching sequence for each of the query sequences.

In some possible embodiments, the set of fingerprints as described herein may be generated by reducing a digital representation of the media data to a reduced dimension binary representation of the media data. The digital representation may relate to one or more of fast Fourier transforms (FFTs), digital Fourier transforms (DFTs), short time Fourier transforms (STFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients.

In some possible embodiments, fingerprints herein may be simple to extract in relation to robust fingerprints required for detecting malicious attacks.

In some possible embodiments, to determine the set of matched sequences of fingerprints for the set of query sequences of fingerprints, the media processing system may search, in a dynamically constructed database of fingerprints, for matched sequences of fingerprints that match a query sequence of fingerprints.

In some possible embodiments, the query sequence of fingerprints begins at a specific query time, whereas the dynamically constructed database of fingerprints excludes one or more portions of fingerprints that are within one or more configurable time windows relative to the specific query time.

In some possible embodiments, to identify a set of offset values based on the set of query sequences and the set of matched sequences, the media processing system uses one or more of histograms constructed from the set of query sequences and the set of matched sequences to determine the set of significant offset values.

10.2. EXAMPLE REPETITION DETECTION PROCESS FLOW - HYBRID APPROACH

FIG. 19B illustrates an example repetition detection process flow with a hybrid approach. In block 1912, a media processing system locates a subset of offset values in a set of offset values in media data using a first type of one or more types of features extractable from the media data (e.g., using fingerprint search and matching as described herein). The subset of offset values comprises time difference values selected from the set of offset values based on one or more selection criteria (e.g., using one or more dimensional histograms).

In block 1914, the media processing system identifies a set of candidate seed time points based on analysis at the subset of offset values using a second type (e.g., using selective row computation of a feature-distance matrix such as a chroma distance matrix) of the one or more types of features.

In some possible embodiments, one or more first features for the first feature type are extracted from the media data. First distance values for a first repetition detection measure (e.g., Hamming distances between bit values of sequences of fingerprints) based on the one or more first features may be computed (e.g., in a sub-process of fingerprint search and matching). The first distance values for the first repetition detection measure may be applied to locate the subset of offset values (e.g., in the sub-process of fingerprint search and matching).

In some possible embodiments, one or more second features for the second feature type are extracted from the media data. Second distance values for a second repetition detection measure (e.g., chroma distance values in selective rows of a chroma distance matrix) based on the one or more second features may be computed. The second distance values for the second repetition detection measure may be applied to identify the set of candidate seed time points.

In some possible embodiments, at least one of the first repetition detection measure and the second repetition detection measure relates to a measure of similarity or dissimilarity as one or more of: Euclidean distances of vectors, vector norms, mean squared errors, bit error rates, auto-correlation based measures, Hamming distances, similarity, or dissimilarity.

In some possible embodiments, the first values and the second values comprise one or more normalized values.

In some possible embodiments, at least one of the one or more types of features herein is used in part to form a digital representation of the media data. For example, the digital representation of the media data may comprise a fingerprint-based reduced dimension binary representation of the media data.

In some possible embodiments, at least one of the one or more types of features comprises a type of features that captures structural properties, tonality including harmony and melody, timbre, rhythm, loudness, stereo mix, or a quantity of sound sources as related to the media data.

In some possible embodiments, the features extractable from the media data are used to provide one or more digital representations of the media data based on one or more of: chroma, chroma difference, fingerprints, Mel-Frequency Cepstral Coefficient (MFCC), chroma-based fingerprints, rhythm pattern, energy, or other variants.

In some possible embodiments, the features extractable from the media data are used to provide one or more digital representations relates to one or more of: fast Fourier transforms (FFTs), digital Fourier transforms (DFTs), short time Fourier transforms (STFTs), Modified Discrete Cosine Transforms (MDCTs), Modified Discrete Sine Transforms (MDSTs), Quadrature Mirror Filters (QMFs), Complex QMFs (CQMFs), discrete wavelet transforms (DWTs), or wavelet coefficients.

In some possible embodiments, the one or more first features of the first feature type and the one or more second features of the second feature type relate to a same time interval of the media data.

In some possible embodiments, the one or more first features of the first feature type are used for feature comparison for all offsets of the media data, while the one or more second features of the second feature type are used for a comparison of features for a certain subset of offsets of the media data. In some possible embodiments, the one or more first features of the first feature type form a representation of the media data for a first time interval of the media data, while the one or more second features of the second feature type forms a representation of the media data for a second different time interval of the media data. In an example, the first time interval is larger than the second different time interval of the media data. In another example, the first time interval covers a complete time length of the media data, while the second time interval covers one or more time portions of the media data within the complete time length of the media data.

In some possible embodiments, extracting one or more first features (e.g., fingerprints) of the first feature type is simple in relation to extracting one or more second features (e.g., chroma features) of the second feature type, from a same portion of the media data.

As used herein, the media data may comprise one or more of: songs, music compositions, scores, recordings, poems, audiovisual works, movies, or multimedia presentations. The media data may be derived from one or more of: audio files, media database records, network streaming applications, media applets, media applications, media data bitstreams, media data containers, over-the-air broadcast media signals, storage media, cable signals, or satellite signals.

As used herein, the stereo mix may comprise one or more stereo parameters of the media data. In some possible embodiments, at least one of the one or more stereo parameters relates to: Coherence, Inter-channel Cross-Correlation (ICC), Inter-channel Level Difference (CLD), Inter-channel Phase Difference (IPD), or Channel Prediction Coefficients (CPC).

In some possible embodiments, the media processing system applies one or more filters to distance values calculated at a certain offset. The media processing system identifies, based on the filtered values, a set of seed time points for scene change detection.

The one or more filters herein may comprise a moving average filter. In some possible embodiments, at least one seed time point in the plurality of seed time points corresponds to a local minimum in the filtered values. In some possible embodiments, at least one seed time point in the plurality of seed time points corresponds to a local maximum in the filtered values. In some possible embodiments, at least one seed time point in the plurality of seed time points corresponds to a specific intermediate value in the statistical values. In some possible embodiments, at least one seed point in the plurality of seed time points may be chosen based on energy values. For instance, the temporal location of the loudest 15s segment may serve as a seed time point for chorus segment detection.

In some embodiments in which chroma features are used in techniques herein, the chroma features may be extracted using one or more window functions. These window functions may be, but are not limited to, musically motivated, perceptually motivated, etc.

As used herein, the features extractable from the media data may or may not relate to a tuning system of 12 equal temperaments.

## 11. IMPLEMENTATION MECHANISMS - HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

For example, FIG. 20 is a block diagram that illustrates a computer system 2000 upon which an embodiment of the invention may be implemented. Computer system 2000 includes a bus 2002 or other communication mechanism for communicating information, and a hardware processor 2004 coupled with bus 2002 for processing information. Hardware processor 2004 may be, for example, a general purpose microprocessor.

Computer system 2000 also includes a main memory 2006, such as a random access memory (RAM) or other dynamic storage device, coupled to bus 2002 for storing information and instructions to be executed by processor 2004. Main memory 2006 also may be used for storing temporary variables or other intermediate information during execution of instructions to be executed by processor 2004. Such instructions, when stored in storage media accessible to processor 2004, render computer system 2000 into a special-purpose machine that is customized to perform the operations specified in the instructions.

Computer system 2000 further includes a read only memory (ROM) 2008 or other static storage device coupled to bus 2002 for storing static information and instructions for processor 2004. A storage device 2010, such as a magnetic disk or optical disk, is provided and coupled to bus 2002 for storing information and instructions.

Computer system 2000 may be coupled via bus 2002 to a display 2012 for displaying information to a computer user. An input device 2014, including alphanumeric and other keys, is coupled to bus 2002 for communicating information and command selections to processor 2004. Another type of user input device is cursor control 2016, such as a mouse, a trackball, or cursor direction keys for communicating direction information and command selections to processor 2004 and for controlling cursor movement on display 2012. This input device typically has two degrees of freedom in two axes, a first axis (e.g., x) and a second axis (e.g., y), that allows the device to specify positions in a plane. Computer system 2000 may be used to control the display system (e.g., 100 in FIG. 1).

Computer system 2000 may implement the techniques described herein using customized hard-wired logic, one or more ASICs or FPGAs, firmware and/or program logic which in combination with the computer system causes or programs computer system 2000 to be a special-purpose machine. According to one embodiment, the techniques herein are performed by computer system 2000 in response to processor 2004 executing one or more sequences of one or more instructions contained in main memory 2006. Such instructions may be read into main memory 2006 from another storage medium, such as storage device 2010. Execution of the sequences of instructions contained in main memory 2006 causes processor 2004 to perform the process steps described herein. In alternative embodiments, hard-wired circuitry may be used in place of or in combination with software instructions.

The term "storage media" as used herein refers to any media that store data and/or instructions that cause a machine to operation in a specific fashion. Such storage media may comprise non-volatile media and/or volatile media. Non-volatile media includes, for example, optical or magnetic disks, such as storage device 2010. Volatile media includes dynamic memory, such as main memory 2006. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 2002. Transmission media can also take the form of acoustic or light waves, such as those generated during radio-wave and infra-red data communications.

Various forms of media may be involved in carrying one or more sequences of one or more instructions to processor 2004 for execution. For example, the instructions may initially be carried on a magnetic disk or solid state drive of a remote computer. The remote computer can load the instructions into its dynamic memory and send the instructions over a telephone line using a modem. A modem local to computer system 2000 can receive the data on the telephone line and use an infra-red transmitter to convert the data to an infra-red signal. An infra-red detector can receive the data carried in the infra-red signal and appropriate circuitry can place the data on bus 2002. Bus 2002 carries the data to main memory 2006, from which processor 2004 retrieves and executes the instructions. The instructions received by main memory 2006 may optionally be stored on storage device 2010 either before or after execution by processor 2004.

Computer system 2000 also includes a communication interface 2018 coupled to bus 2002. Communication interface 2018 provides a two-way data communication coupling to a network link 2020 that is connected to a local network 2022. For example, communication interface 2018 may be an integrated services digital network (ISDN) card, cable modem, satellite modem, or a modem to provide a data communication connection to a corresponding type of telephone line. As another example, communication interface 2018 may be a local area network (LAN) card to provide a data communication connection to a compatible LAN. Wireless links may also be implemented. In any such implementation, communication interface 2018 sends and receives electrical, electromagnetic or optical signals that carry digital data streams representing various types of information.

Network link 2020 typically provides data communication through one or more networks to other data devices. For example, network link 2020 may provide a connection through local network 2022 to a host computer 2024 or to data equipment operated by an Internet Service Provider (ISP) 2026. ISP 2026 in turn provides data communication services through the world wide packet data communication network now commonly referred to as the "Internet" 2028. Local network 2022 and Internet 2028 both use electrical, electromagnetic or optical signals that carry digital data streams. The signals through the various networks and the signals on network link 2020 and through communication interface 2018, which carry the digital data to and from computer system 2000, are example forms of transmission media.

Computer system 2000 can send messages and receive data, including program code, through the network(s), network link 2020 and communication interface 2018. In the Internet example, a server 2030 might transmit a requested code for an application program through Internet 2028, ISP 2026, local network 2022 and communication interface 2018. The received code may be executed by processor 2004 as it is received, and/or stored in storage device 2010, or other non-volatile storage for later execution.

## 12. EQUIVALENTS, EXTENSIONS, ALTERNATIVES AND MISCELLANEOUS

In the foregoing specification, possible embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

**Claims**

1. A method for repetition detection in media data, comprising:

   identifying (1912) a subset of offset values in a set of offset values in media data using a first type of one or more types of features extractable from the media data, the subset of offset values selected from the set of offset values based on one or more selection criteria;
   identifying (1914) a set of candidate seed time points based on the subset of offset values using a second type of the one or more types of features;

   wherein the method is performed by one or more computing devices.

2. The method of Claim 1, further comprising:

   extracting, from the media data, one or more first features for the first feature type;
   computing first distance values for a first repetition detection measure based on the one or more first features;
   applying the first distance values for the first repetition detection measure to identify the subset of offset values;
   extracting, from the media data, one or more second features for the second feature type;
   computing second distance values for a second repetition detection measure based on the one or more second features;
   applying the second distance values for the second repetition detection measure to identify the set of candidate seed time points.

3. The method of Claim 2, wherein at least one of the one or more types of features comprises a type of features that captures structural properties, tonality including harmony and melody, timbre, rhythm, loudness, stereo mix, or a quantity of sound sources as related to the media data, and wherein the stereo mix may comprise one or more stereo parameters of the media data, at least one of the one or more stereo parameters relating to: Coherence, Inter-channel Cross-Correlation (ICC), Inter-channel Level Difference (CLD), Inter-channel Phase Difference (IPD), or Channel Prediction Coefficients (CPC).

4. The method of Claim 2, wherein the one or more first features of the first feature type form a representation of the media data for a first time interval of the media data, while the one or more second features of the second feature type forms a representation of the media data for a second different time interval of the media data.

5. The method of Claim 2, wherein the set of offset values is identified by computing distance values for the one or more first features of the first type; and wherein the subset of offset values is identified from the set of offset values by computing a histogram of the offset values.

6. The method of Claim 1, further comprising:

   applying one or more filters to distance values at one or more offsets;
   identifying, based on the filtered values, a set of seed time points for scene change detection.

7. The method of Claim 1, further comprising extracting one or more chroma features using:

   one or more window functions; or

      one or more musically motivated window functions.

8. The method of Claim 2, wherein at least one of the first repetition detection measure and the second repetition detection measure relates to one or more of: Euclidean distances of vectors, vector norms, mean squared errors, bit error rates, auto-correlation based measures, Hamming distances, similarity, or dissimilarity.

9. The method of Claim 2, wherein at least one of the one or more types of features is used to form in part a digital representation of the media data.

**10.** The method of Claim 9, wherein the digital representation of the media data comprises a fingerprint-based reduced dimension binary representation of the media data.

**11.** The method of Claim 2, wherein at least one of the one or more types of features comprises a type of features that captures structural properties, tonality including harmony and melody, timbre, rhythm, loudness, stereo mix, or a quantity of sound sources as related to the media data.

**12.** The method of Claim 11, wherein the stereo mix comprises one or more stereo parameters of the media data, and wherein at least one of the one or more stereo parameters relates to: Coherence, Inter-channel Cross-Correlation (ICC), Inter-channel Level Difference (CLD), Inter-channel Phase Difference (IPD), or Channel Prediction Coefficients (CPC).

**13.** A system configured to perform any one of the methods recited in Claims 1-12.

**14.** An apparatus comprising a processor and configured to perform any one of the methods recited in Claims 1-12.

**15.** A computer readable storage medium, comprising software instructions, which when executed by one or more processors cause performance of any one of the methods recited in Claims 1-12.

**Patentansprüche**

**1.** Verfahren zum Erkennen von Wiederholungen in Mediendaten, umfassend folgende Schritte:

Identifizieren (1912) einer Teilmenge von Versatzwerten in einer Menge von Versatzwerten in Mediendaten unter Verwendung eines ersten Typs von einem oder mehreren Merkmalstypen, die aus den Mediendaten extrahierbar sind, wobei die Teilmenge von Versatzwerten aus der Menge von Versatzwerten basierend auf einem oder mehreren Auswahlkriterien ausgewählt wird;
Identifizieren (1914) einer Menge von in Frage kommenden Saatzeitpunkten basierend auf der Teilmenge von Versatzwerten unter Verwendung eines zweiten Typs des einen oder der mehreren Merkmalstypen;

wobei das Verfahren von einer oder mehreren Computervorrichtungen ausgeführt wird.

**2.** Verfahren nach Anspruch 1, ferner umfassend folgende Schritte:

Extrahieren aus den Mediendaten eines oder mehrerer erster Merkmale für den ersten Merkmalstyp;
Berechnen erster Abstandswerte für ein erstes Wiederholungserkennungsmaß basierend auf dem einen oder den mehreren ersten Merkmalen;
Anwenden der ersten Abstandswerte für das erste Wiederholungserkennungsmaß, um die Teilmenge von Versatzwerten zu identifizieren;
Extrahieren aus den Mediendaten eines oder mehrerer zweiter Merkmale für den zweiten Merkmalstyp;
Berechnen von zweiten Abstandswerten für ein zweites Wiederholungserkennungsmaß basierend auf dem einen oder den mehreren zweiten Merkmalen;
Anwenden der zweiten Abstandswerte für das zweite Wiederholungserkennungsmaß, um die Menge von in Frage kommenden Saatzeitpunkten zu identifizieren.

**3.** Verfahren nach Anspruch 2, wobei mindestens einer von dem einen oder den mehreren Merkmalstypen einen Merkmalstyp umfasst, der strukturelle Eigenschaften, Tonalität, die Harmonie und Melodie umfasst, Klangfarbe, Rhythmus, Lautstärke, Stereomischung oder eine Größe von Tonquellen in Bezug auf die Mediendaten erfasst, und wobei die Stereomischung einen oder mehrere Stereoparameter der Mediendaten umfassen kann, wobei mindestens einer von dem einen oder den mehreren Stereoparametern Folgendes betrifft: Kohärenz, Zwischenkanalkreuzkorrelation (ICC), Zwischenkanalpegeldifferenz (CLD), Zwischenkanalphasendifferenz (IPD) oder Kanalprädiktionskoeffizienten (CPC).

**4.** Verfahren nach Anspruch 2, wobei das eine oder die mehreren ersten Merkmale des ersten Merkmalstyps eine Darstellung der Mediendaten für ein erstes Zeitintervall der Mediendaten bildet bzw. bilden, während das eine oder die mehreren zweiten Merkmale des zweiten Merkmaltyps eine Darstellung der Mediendaten für ein zweites anderes Zeitintervall der Mediendaten bildet bzw. bilden.

**5.** Verfahren nach Anspruch 2, wobei die Menge von Versatzwerten durch Berechnen von Abstandswerten für das eine oder die mehreren ersten Merkmale des ersten Typs identifiziert wird; und wobei die Teilmenge von Versatzwerten aus der Menge von Versatzwerten durch Berechnen eines Histogramms der Versatzwerte identifiziert wird.

**6.** Verfahren nach Anspruch 1, ferner umfassend folgende Schritte:

Anwenden eines oder mehrerer Filter auf Abstandswerte an einem oder mehreren Versätzen;
Identifizieren, basierend auf den gefilterten Werten, einer Menge von Saatzeitpunkten für eine Szenenänderungserkennung.

**7.** Verfahren nach Anspruch 1, ferner umfassend das Extrahieren eines oder mehrerer Farbtonmerkmale unter Verwendung von:

einer oder mehrerer Fensterfunktionen; oder
einer oder mehrerer musikalisch motivierter Fensterfunktionen.

**8.** Verfahren nach Anspruch 2, wobei mindestens eines von dem ersten Wiederholungserkennungsmaß und dem zweiten Wiederholungserkennungsmaß eines oder mehrere betrifft von: euklidischen Vektorabständen, Vektornormen, mittleren quadratischen Fehlern, Bitfehlerraten, Autokorrelation basierend auf Messungen, Hamming-Abständen, Ähnlichkeit oder Unähnlichkeit.

**9.** Verfahren nach Anspruch 2, wobei mindestens einer von dem einen oder den mehreren Merkmalstypen verwendet wird, um teilweise eine digitale Darstellung der Mediendaten zu bilden.

**10.** Verfahren nach Anspruch 9, wobei die digitale Darstellung der Mediendaten eine fingerabdruckbasierte verkleinerte binäre Darstellung der Mediendaten umfasst.

**11.** Verfahren nach Anspruch 2, wobei mindestens einer von dem einen oder den mehreren Merkmalstypen einen Merkmalstyp umfasst, der strukturelle Eigenschaften, Tonalität, die Harmonie und Melodie umfasst, Klangfarbe, Rhythmus, Lautstärke, Stereomischung oder eine Größe von Tonquellen in Bezug auf die Mediendaten erfasst.

**12.** Verfahren nach Anspruch 11, wobei die Stereomischung einen oder mehrere Stereoparameter der Mediendaten umfasst, und wobei mindestens einer von dem einen oder den mehreren Stereoparametern Folgendes betrifft: Kohärenz, Zwischenkanalkreuzkorrelation (ICC), Zwischenkanalpegeldifferenz (CLD), Zwischenkanalphasendifferenz (IPD) oder Kanalprädiktionskoeffizienten (CPC).

**13.** System, konfiguriert, um eines der Verfahren nach Anspruch 1 bis 12 auszuführen.

**14.** Gerät, umfassend einen Prozessor und konfiguriert, um eines der Verfahren nach Anspruch 1 bis 12 auszuführen.

**15.** Computerlesbares Speichermedium, umfassend Software-Anweisungen, die, wenn sie von einem oder mehreren Prozessoren ausgeführt werden, das Ausführen eines der Verfahren nach Anspruch 1 bis 12 bewirken.

## Revendications

**1.** Procédé de détection de répétitions dans des données de média, comportant les étapes consistant à :

identifier (1912) un sous-ensemble de valeurs de décalage dans un ensemble de valeurs de décalage dans des données de média à l’aide d’un premier type parmi un ou plusieurs types de caractéristiques extractibles des données de média, le sous-ensemble de valeurs de décalage étant sélectionné à partir de l’ensemble de valeurs de décalage d’après un ou plusieurs critères de sélection ;
identifier (1914) un ensemble d’instants d’amorçage candidats d’après le sous-ensemble de valeurs de décalage à l’aide d’un un deuxième type parmi le ou les types de caractéristiques ;

le procédé étant réalisé par un ou plusieurs dispositifs informatiques.

**2.** Procédé selon la revendication 1, comportant en outre les étapes consistant à :

extraire, des données de média, une ou plusieurs premières caractéristiques pour le premier type de caractéristique ;
calculer des premières valeurs de distance pour une première mesure de détection de répétitions d'après la ou les premières caractéristiques ;
appliquer les premières valeurs de distance pour la première mesure de détection de répétitions pour identifier le sous-ensemble de valeurs de décalage ;
extraire, des données de média, un ou plusieurs deuxième caractéristiques pour le deuxième type de caractéristique ;
calculer des deuxièmes valeurs de distance pour une deuxième mesure de détection de répétitions d'après la ou les deuxièmes caractéristiques ;
appliquer les deuxièmes valeurs de distance pour la deuxième mesure de détection de répétitions pour identifier l'ensemble d'instants d'amorçage candidats.

3. Procédé selon la revendication 2, au moins un type parmi le ou les types de caractéristiques comportant un type de caractéristique qui capture des propriétés structurales, une tonalité comprenant une harmonie et une mélodie, un timbre, un rythme, une sonie, un mixage stéréo, ou une quantité de sources sonores comme étant liés aux données de média, et le mixage stéréo pouvant comporter un ou plusieurs paramètres stéréo des données de média, au moins un paramètre parmi le ou les paramètres stéréo se rapportant : à la cohérence, à la corrélation croisée entre voies (ICC), à la différence de niveau entre voies (CLD), au déphasage entre voies (IPD) ou aux coefficients de prédiction de voies (CPC).

4. Procédé selon la revendication 2, la ou les premières caractéristiques du premier type de caractéristique formant une représentation des données de média pendant un premier intervalle de temps des données de média, tandis que la ou les deuxièmes caractéristiques du deuxième type de caractéristique forme une représentation des données de média pendant un deuxième intervalle de temps différent des données de média.

5. Procédé selon la revendication 2, l'ensemble de valeurs de décalage étant identifié en calculant des valeurs de distance pour la ou les premières caractéristiques du premier type ; et le sous-ensemble de valeurs de décalage étant identifié à partir de l'ensemble de valeurs de décalage en calculant un histogramme des valeurs de décalage.

6. Procédé selon la revendication 1, comportant en outre les étapes consistant à :

appliquer un ou plusieurs filtres à des valeurs de distance avec un ou plusieurs décalages ;
identifier, d'après les valeurs filtrées, un ensemble d'instants d'amorçage pour la détection de changements de scène.

7. Procédé selon la revendication 1, comportant en outre l'étape consistant à extraire une ou plusieurs caractéristiques de chroma en utilisant :

une ou plusieurs fonctions de fenêtre ; ou
une ou plusieurs fonctions de fenêtre à motivation musicale.

8. Procédé selon la revendication 2, au moins une mesure parmi la première mesure de détection de répétitions et la deuxième mesure de détection de répétitions se rapportant à une ou plusieurs quantités parmi : des distances euclidiennes de vecteurs, des normes de vecteurs, des erreurs moyennes quadratiques, des taux d'erreurs sur les bits, des mesures basées sur une autocorrélation, des distances de Hamming, une similarité, ou une dissimilarité.

9. Procédé selon la revendication 2, au moins un type parmi le ou les types de caractéristiques étant utilisé pour former en partie une représentation numérique des données de média.

10. Procédé selon la revendication 9, la représentation numérique des données de média comporte une représentation binaire en dimension réduite basée sur une signature des données de média.

11. Procédé selon la revendication 2, au moins un type parmi le ou les types de caractéristiques comportant un type de caractéristique qui capture des propriétés structurales, une tonalité comprenant une harmonie et une mélodie, un timbre, un rythme, une sonie, un mixage stéréo, ou une quantité de sources sonores comme étant liés aux données de média.

**12.** Procédé selon la revendication 11, le mixage stéréo comportant un ou plusieurs paramètres stéréo des données de média, et au moins un paramètre parmi le ou les paramètres stéréo se rapportant : à la cohérence, à la corrélation croisée entre voies (ICC), à la différence de niveau entre voies (CLD), au déphasage entre voies (IPD) ou aux coefficients de prédiction de voies (CPC).

**13.** Système configuré pour réaliser l'un quelconque des procédés exposés dans les revendications 1 à 12.

**14.** Appareil comportant un processeur et configuré pour réaliser l'un quelconque des procédés exposés dans les revendications 1 à 12.

**15.** Support de stockage lisible par ordinateur, comportant des instructions de logiciel qui, lorsqu'elles sont exécutées par un ou plusieurs processeurs, provoquent la réalisation de l'un quelconque des procédés exposés dans les revendications 1 à 12.

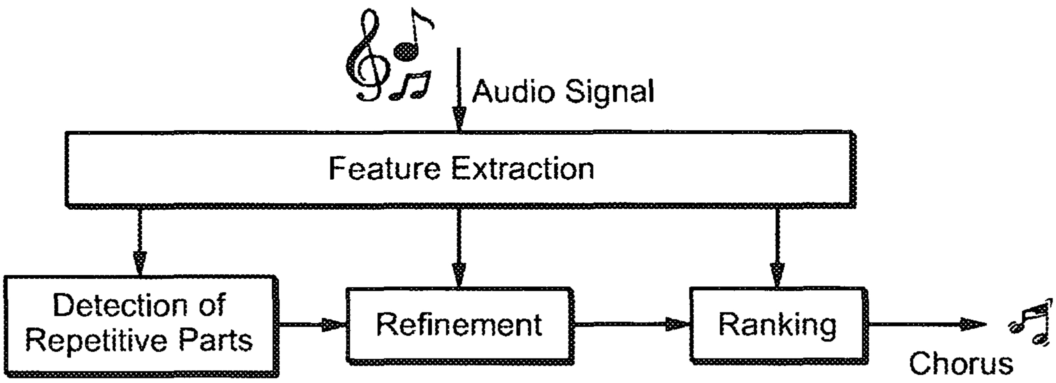
Audio Signal
Feature Extraction
Detection of Repetitive Parts
Refinement
Ranking
Chorus

FIG. 1

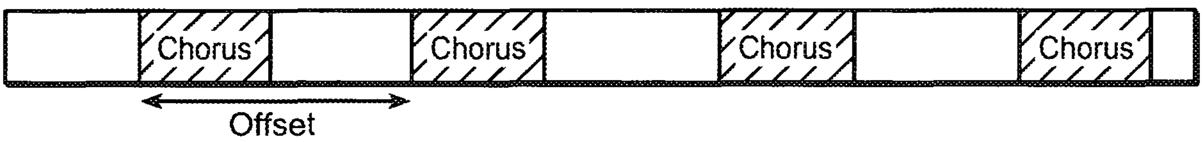
Chorus
Chorus
Chorus
Chorus
Offset

FIG. 2

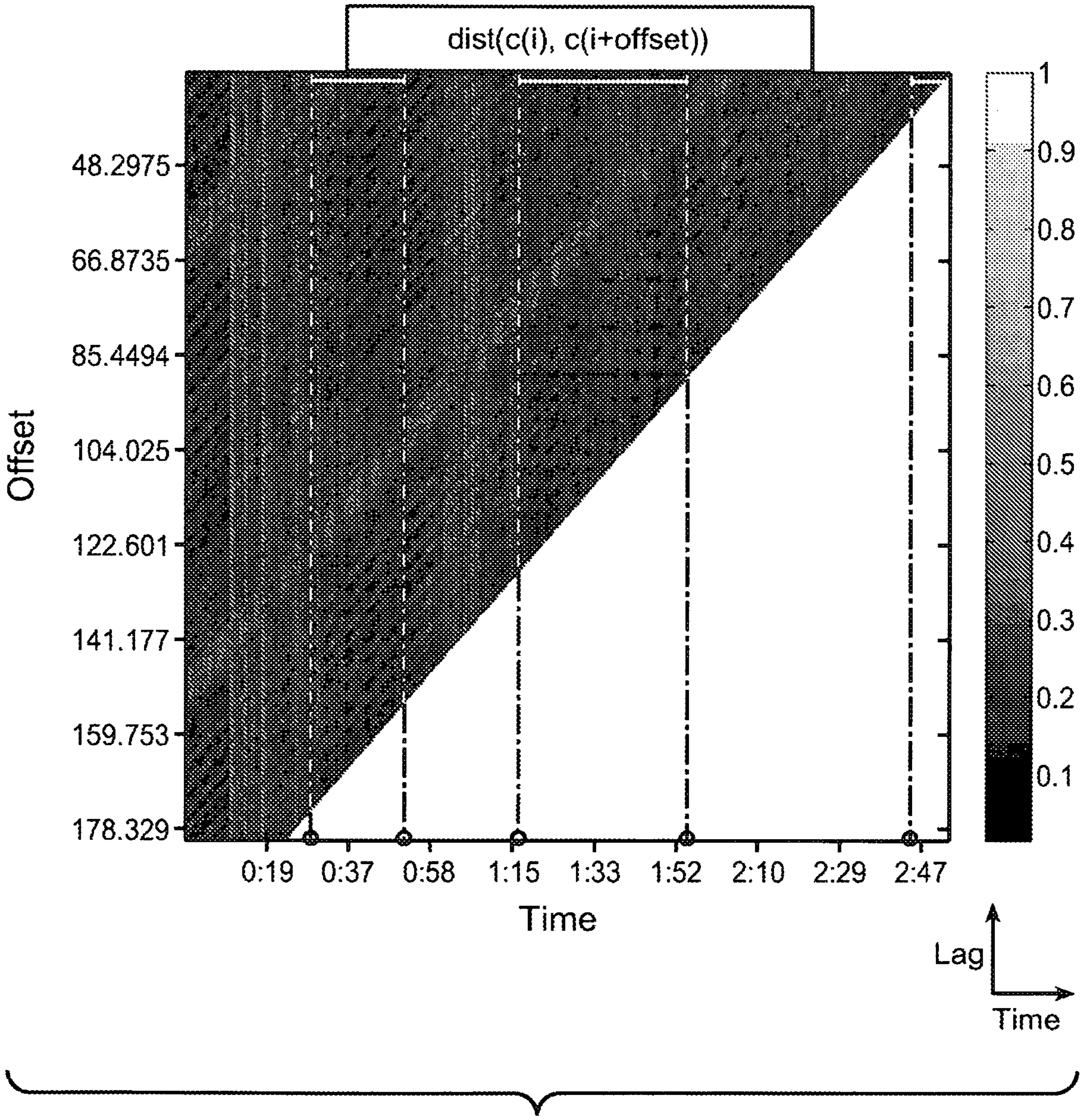
dist(c(i), c(i+offset))
Offset
48.2975
66.8735
85.4494
104.025
122.601
141.177
159.753
178.329
0:19
0:37
0:58
1:15
1:33
1:52
2:10
2:29
2:47
Time
1
0.9
0.8
0.7
0.6
0.5
0.4
0.3
0.2
0.1
Lag
Time

FIG. 3

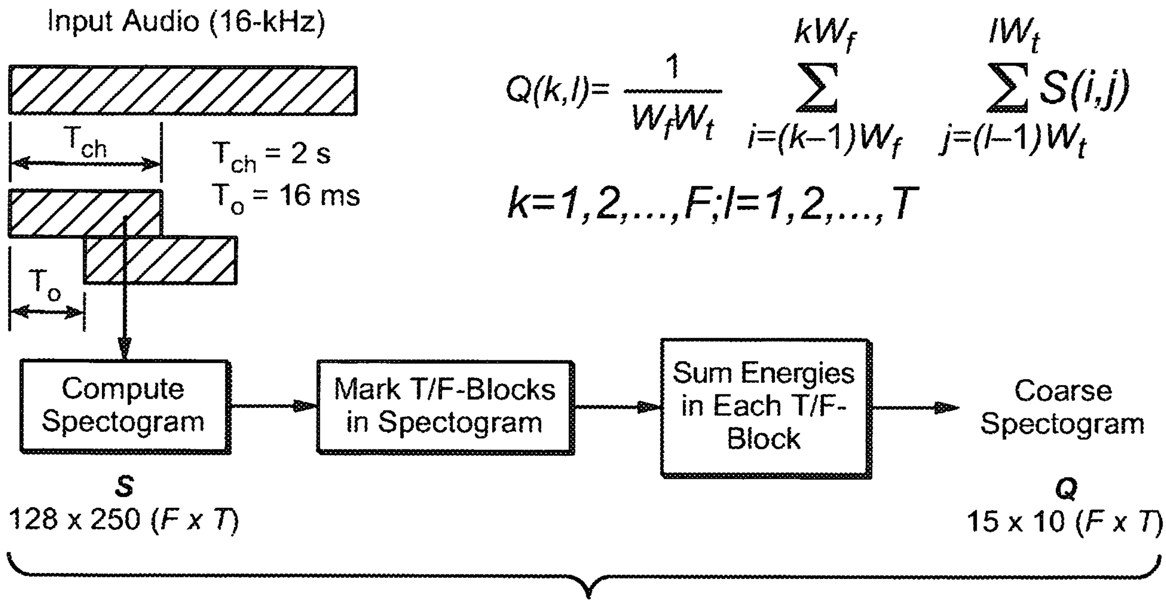
Input Audio (16-kHz)
Tch
Tch = 2 s
To = 16 ms
To
Q(k,l)= 1/(WfWt) Σ_{i=(k−1)Wf}^{kWf} Σ_{j=(l−1)Wt}^{lWt} S(i,j)
k=1,2,...,F;l=1,2,...,T
Compute Spectogram
Mark T/F-Blocks in Spectogram
Sum Energies in Each T/F-Block
Coarse Spectogram
S
128 x 250 (F x T)
Q
15 x 10 (F x T)

FIG. 4

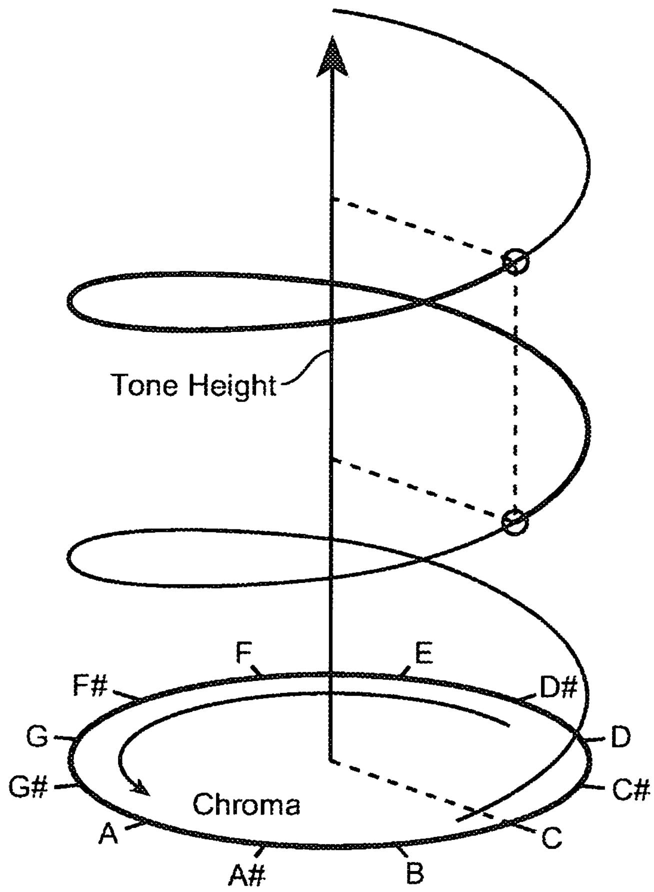
Tone Height
F
E
F#
D#
G
D
G#
C#
Chroma
A
C
A#
B

FIG. 5

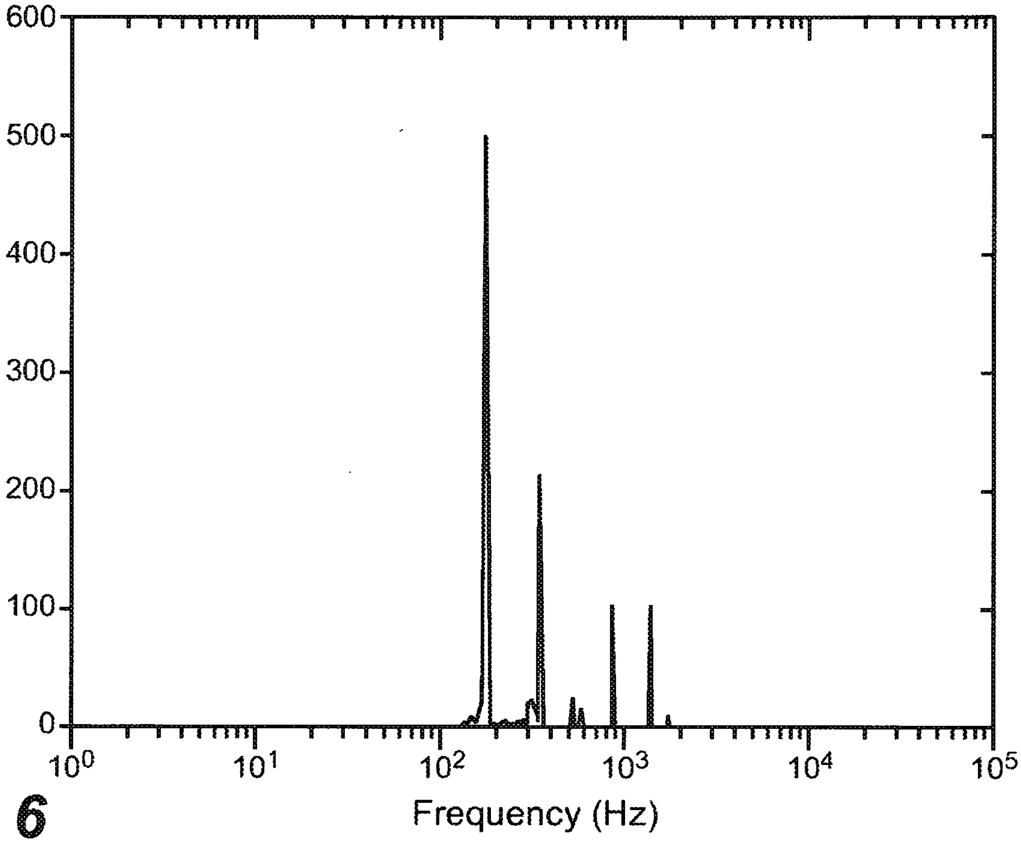
600
500
400
300
200
100
0
$10^0$
$10^1$
$10^2$
$10^3$
$10^4$
$10^5$
Frequency (Hz)

FIG. 6

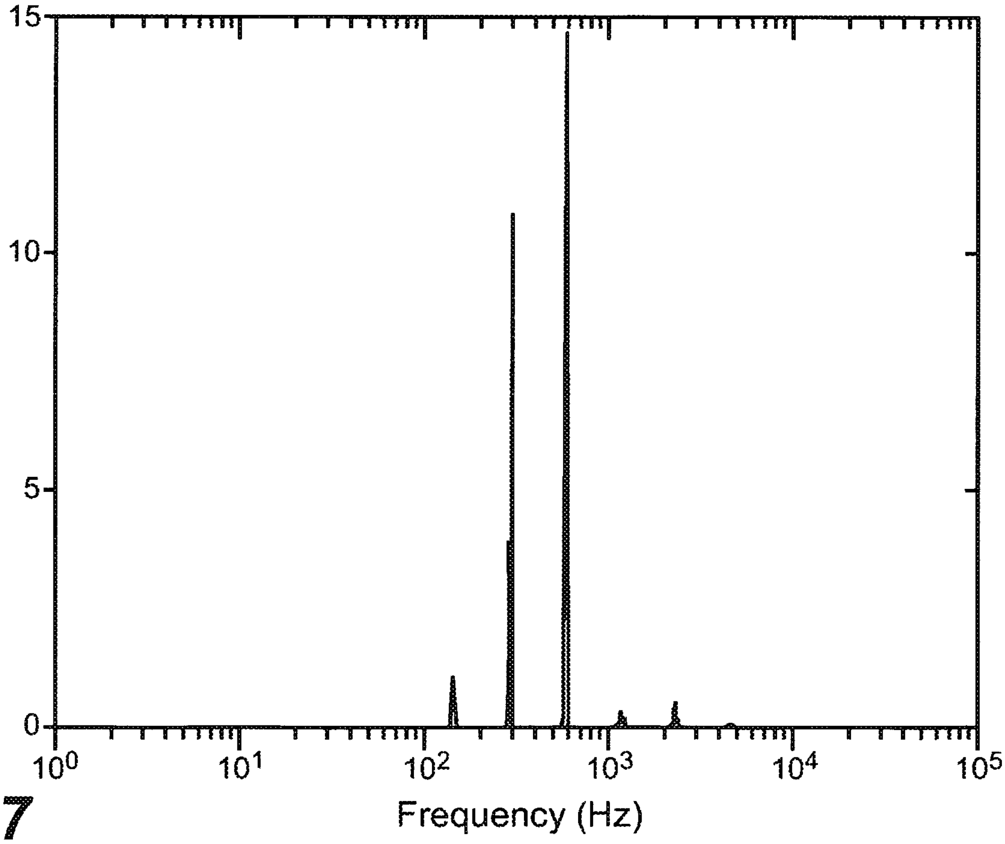
15
10
5
0
$10^0$
$10^1$
$10^2$
$10^3$
$10^4$
$10^5$
Frequency (Hz)

FIG. 7

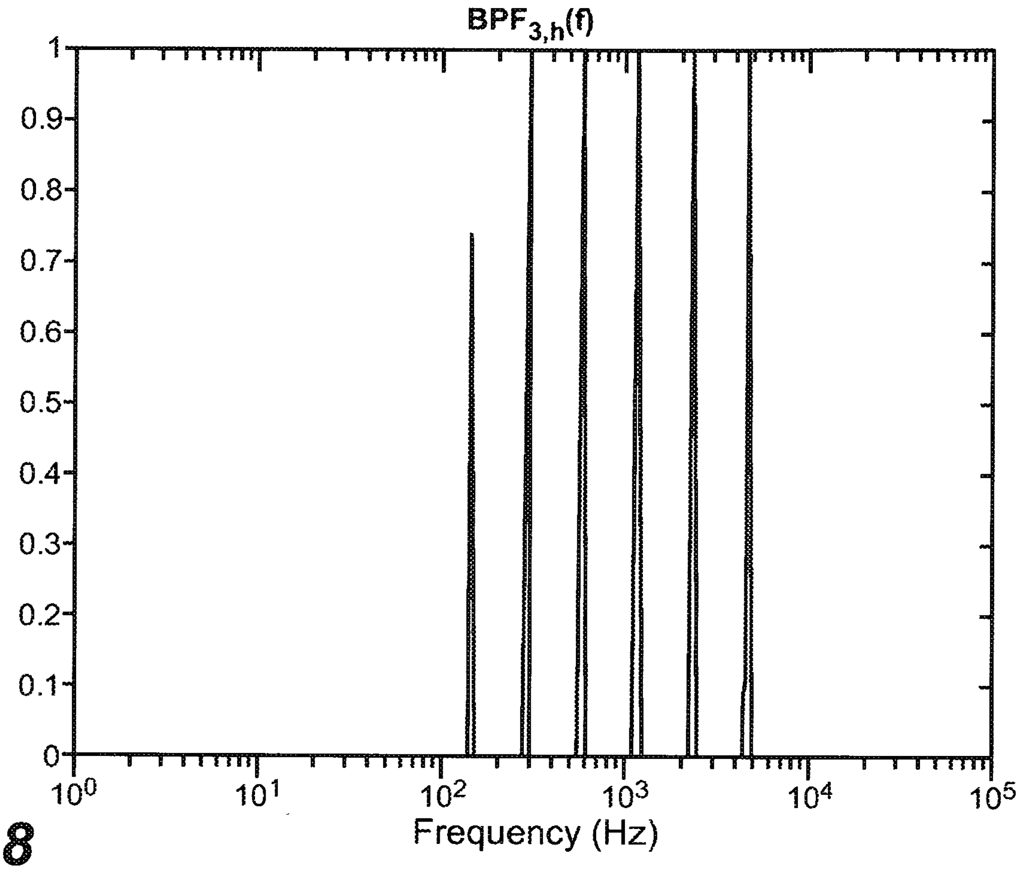
BPF$_{3,h}$(f)
1
0.9
0.8
0.7
0.6
0.5
0.4
0.3
0.2
0.1
0
$10^0$
$10^1$
$10^2$
$10^3$
$10^4$
$10^5$
Frequency (Hz)

FIG. 8

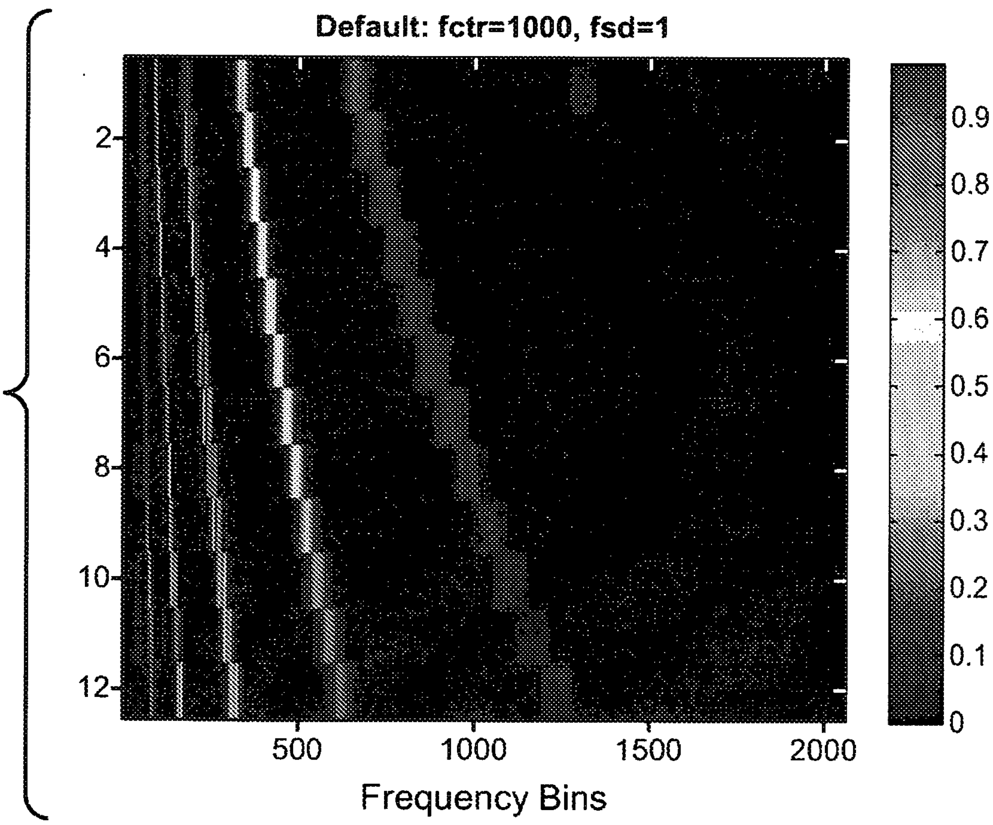
Default: fctr=1000, fsd=1
2
4
6
8
10
12
500
1000
1500
2000
Frequency Bins
0.9
0.8
0.7
0.6
0.5
0.4
0.3
0.2
0.1
0

FIG. 9

FIG. 10

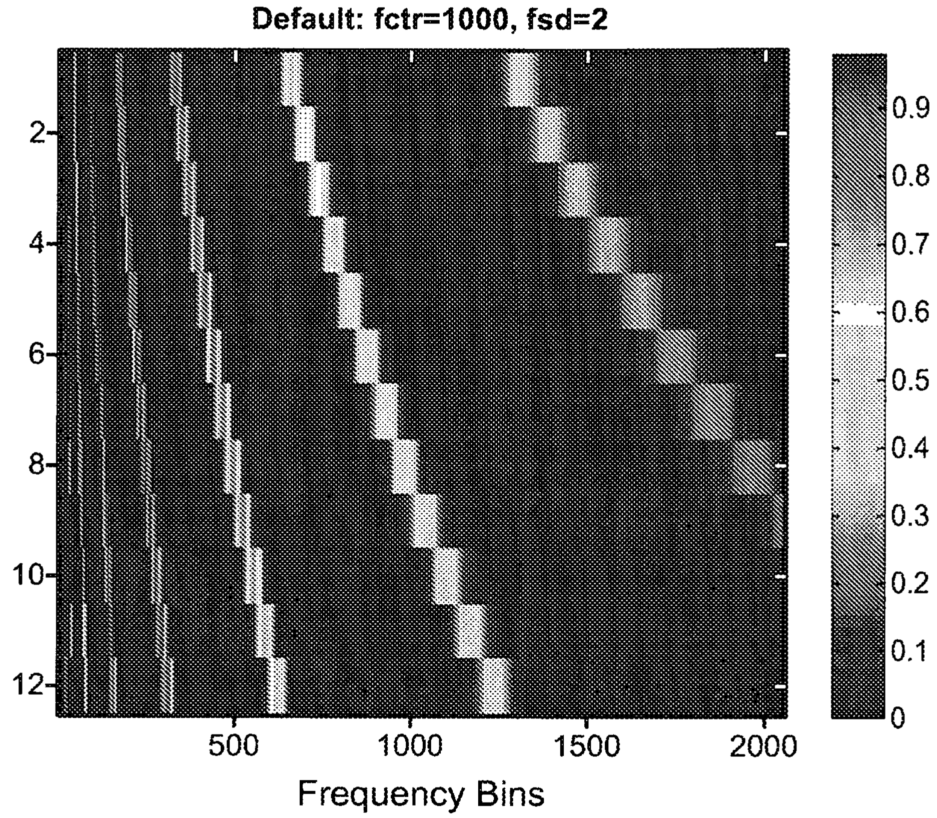
Default: fctr=1000, fsd=2
2
4
6
8
10
12
500
1000
1500
2000
Frequency Bins
0.9
0.8
0.7
0.6
0.5
0.4
0.3
0.2
0.1
0

FIG. 11

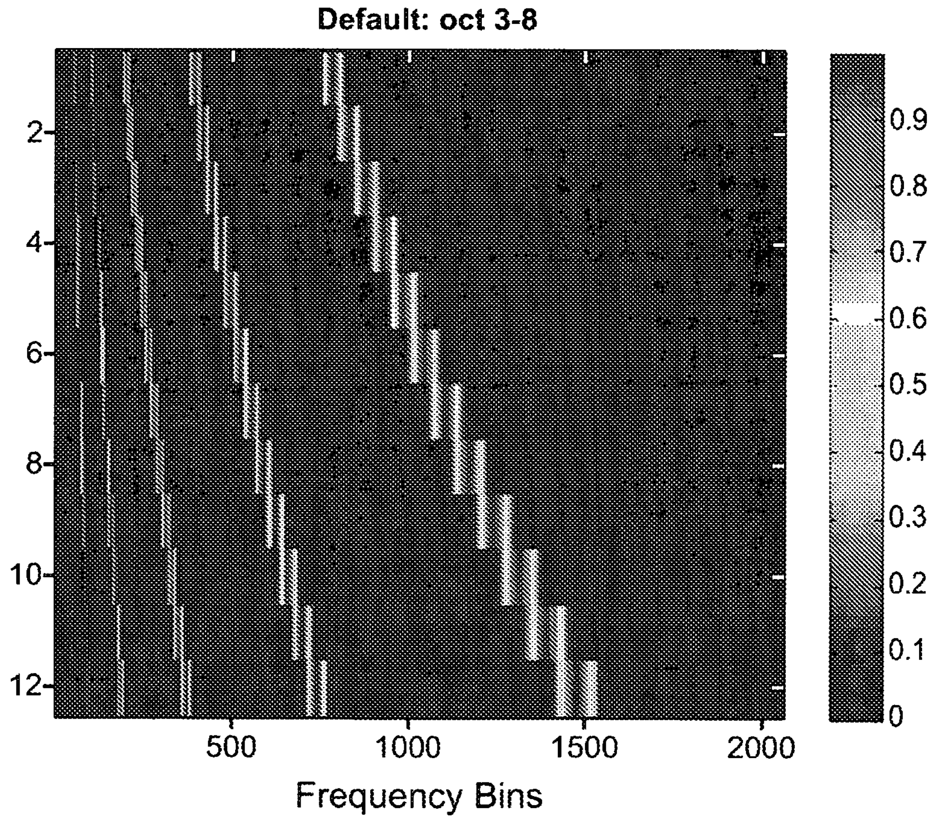
Default: oct 3-8
2
4
6
8
10
12
500
1000
1500
2000
Frequency Bins
0.9
0.8
0.7
0.6
0.5
0.4
0.3
0.2
0.1
0

FIG. 12

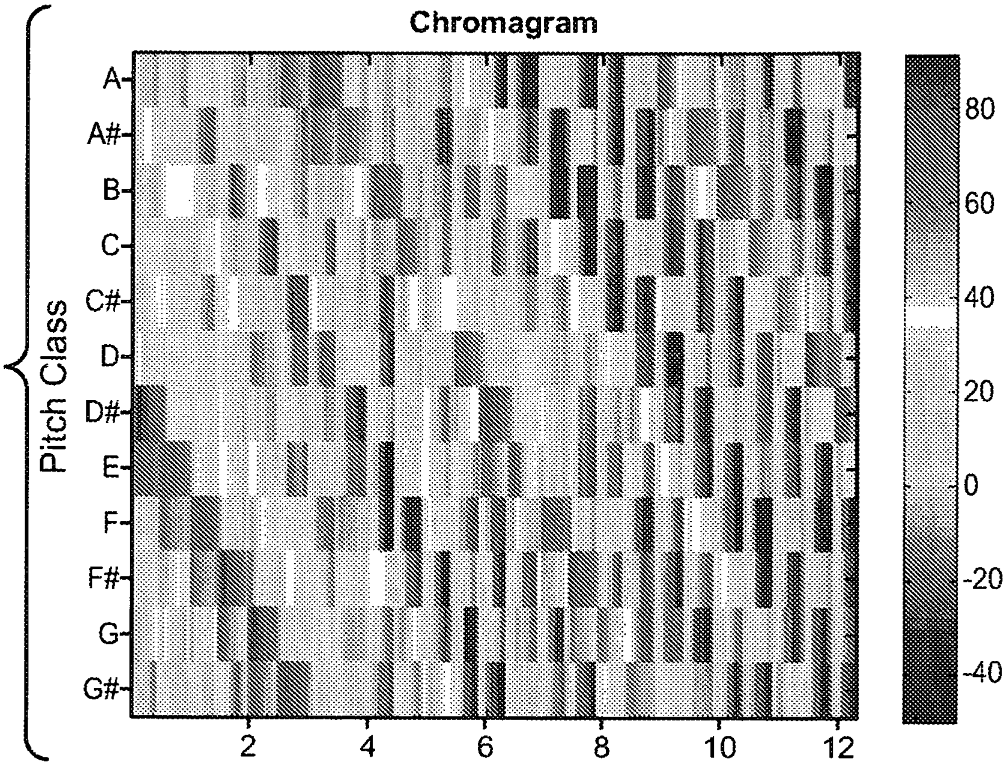
Chromagram
Pitch Class
A
A#
B
C
C#
D
D#
E
F
F#
G
G#
2
4
6
8
10
12
80
60
40
20
0
-20
-40

FIG. 13

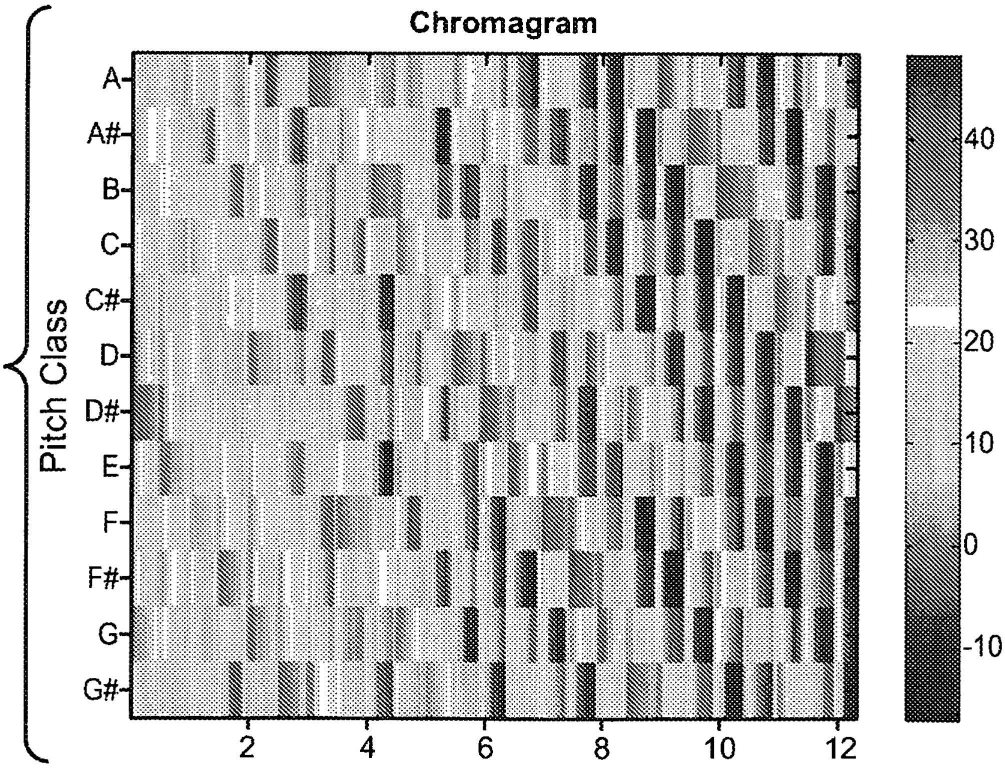
Chromagram
Pitch Class
A
A#
B
C
C#
D
D#
E
F
F#
G
G#
2
4
6
8
10
12
40
30
20
10
0
-10

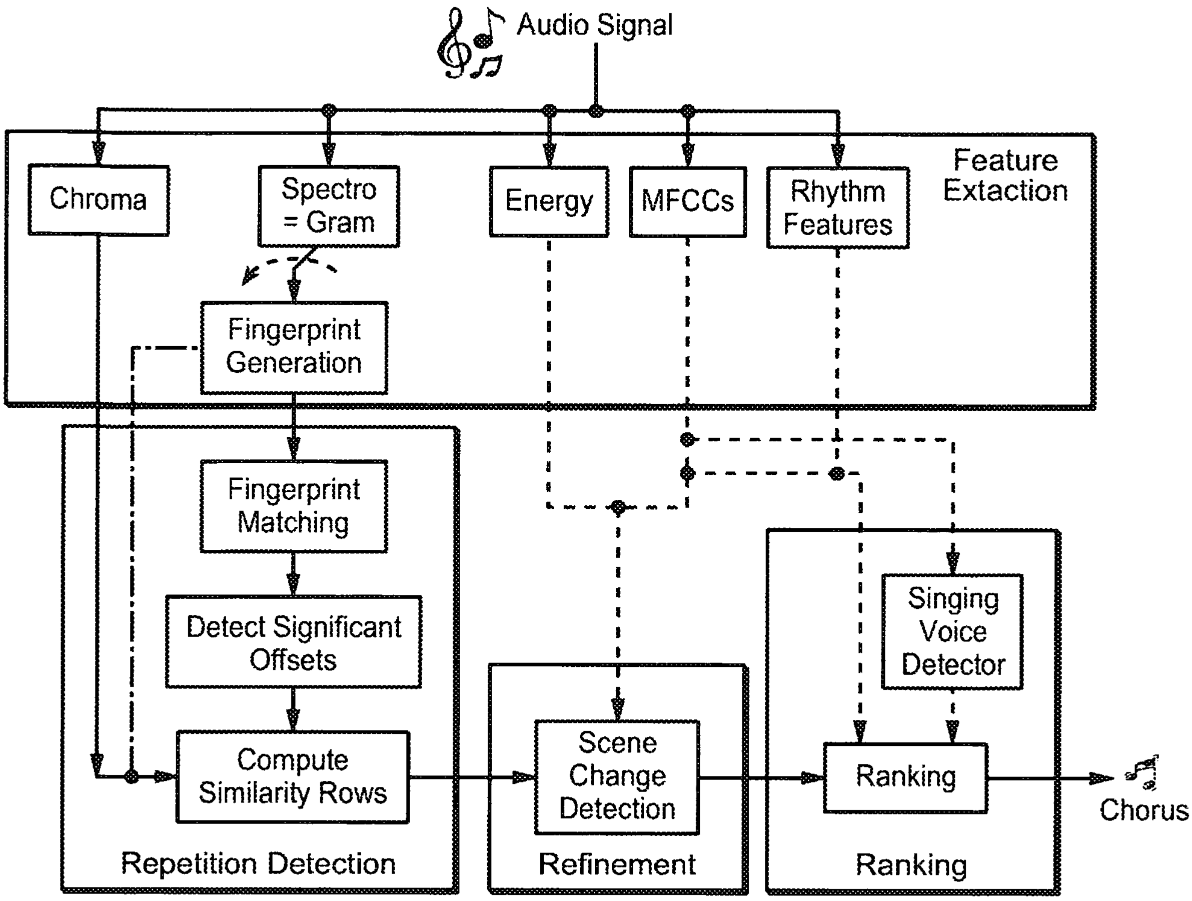

Audio Signal
Feature Extaction
Chroma
Spectro = Gram
Energy
MFCCs
Rhythm Features
Fingerprint Generation
Fingerprint Matching
Detect Significant Offsets
Compute Similarity Rows
Repetition Detection
Scene Change Detection
Refinement
Singing Voice Detector
Ranking
Ranking
Chorus


FIG. 14

FIG. 15

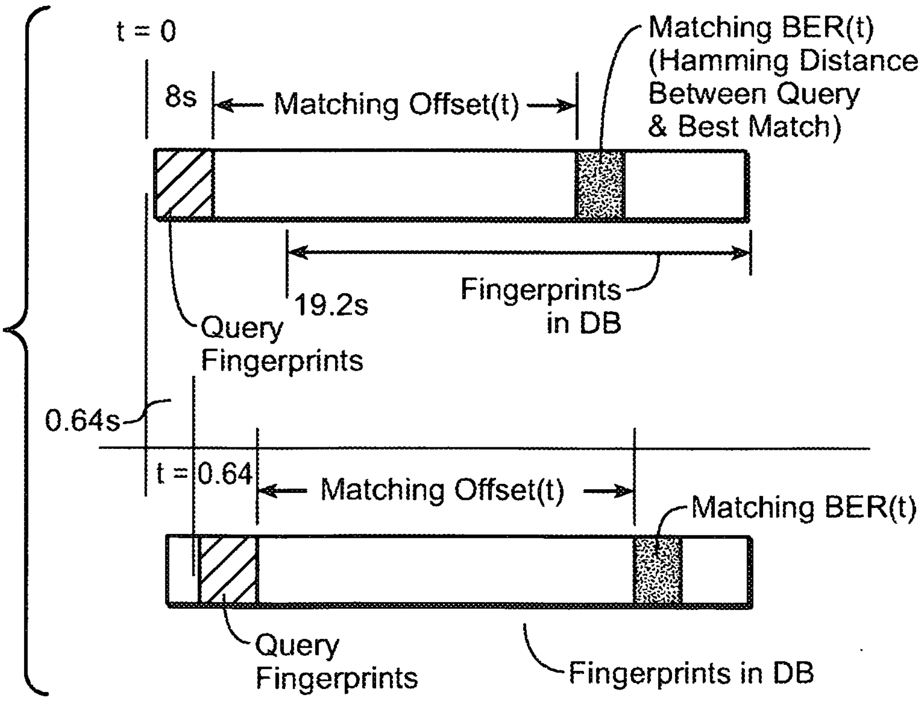

t = 0
8s
Matching Offset(t)
Matching BER(t) (Hamming Distance Between Query & Best Match)
19.2s
Fingerprints in DB
Query Fingerprints
0.64s
t = 0.64
Matching Offset(t)
Matching BER(t)
Query Fingerprints
Fingerprints in DB

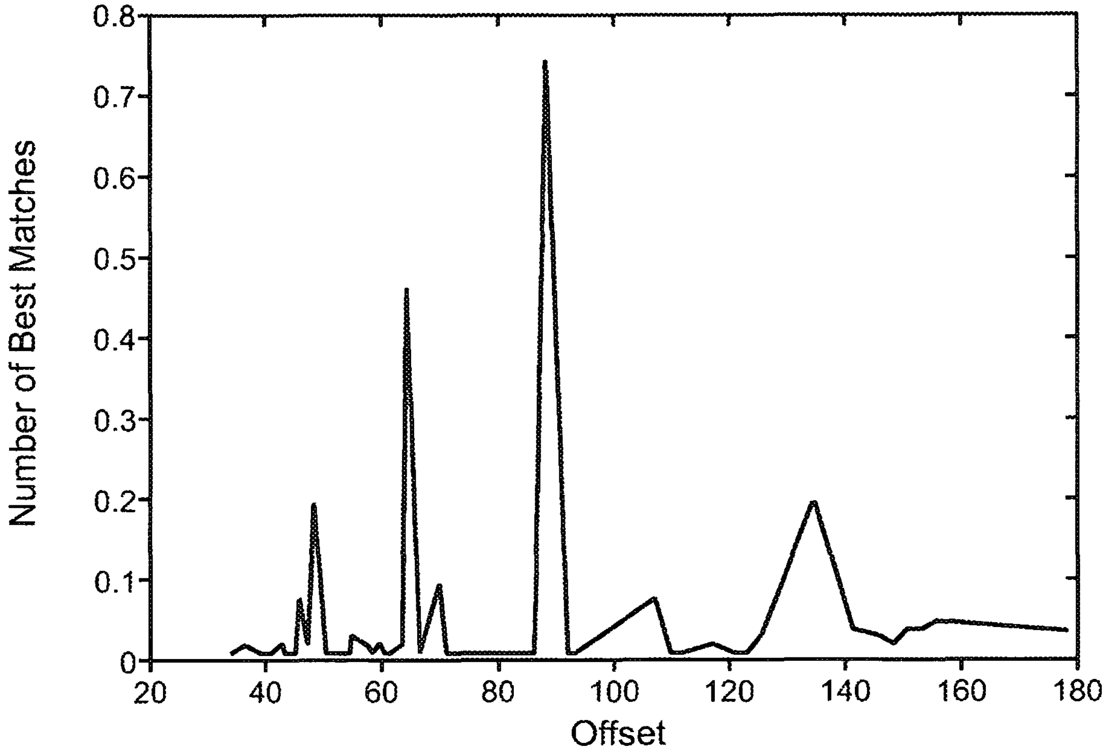
Number of Best Matches
0.8
0.7
0.6
0.5
0.4
0.3
0.2
0.1
0
20
40
60
80
100
120
140
160
180
Offset

FIG. 16

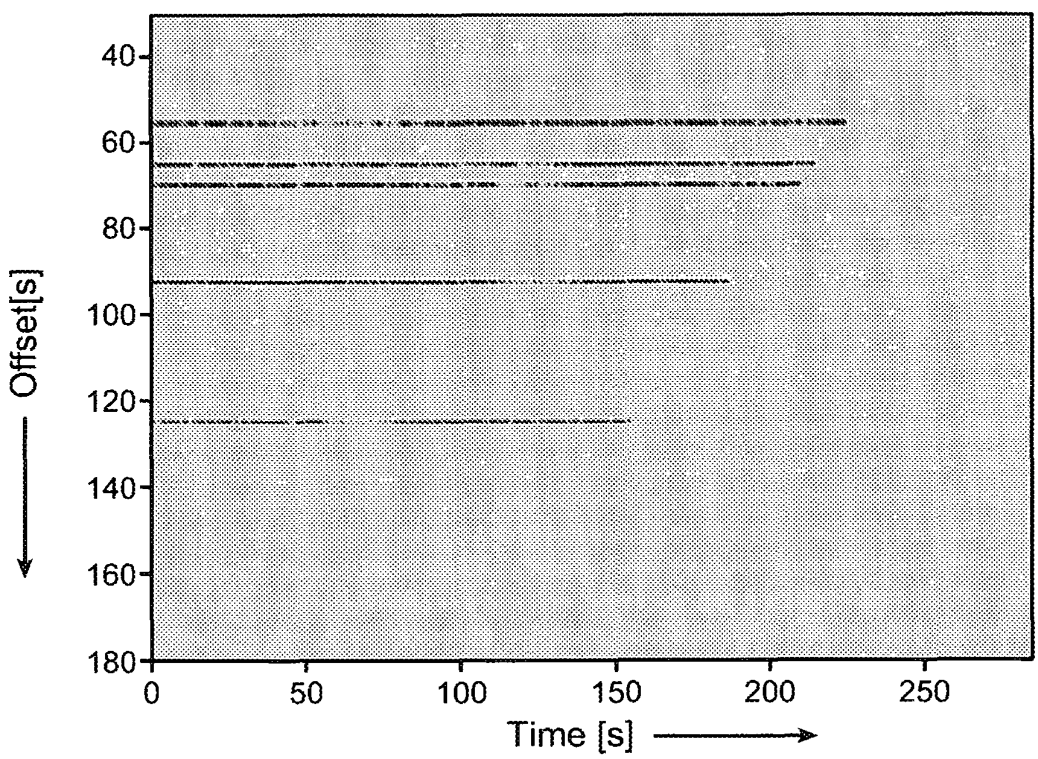
Offset[s]
40
60
80
100
120
140
160
180
0
50
100
150
200
250
Time [s]

FIG. 17

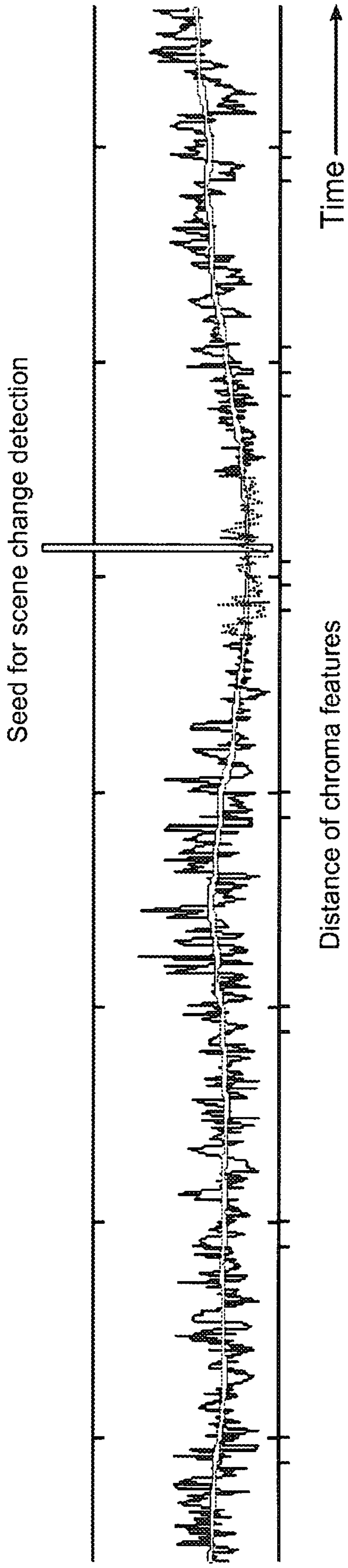
Seed for scene change detection
Time
Distance of chroma features

FIG. 18

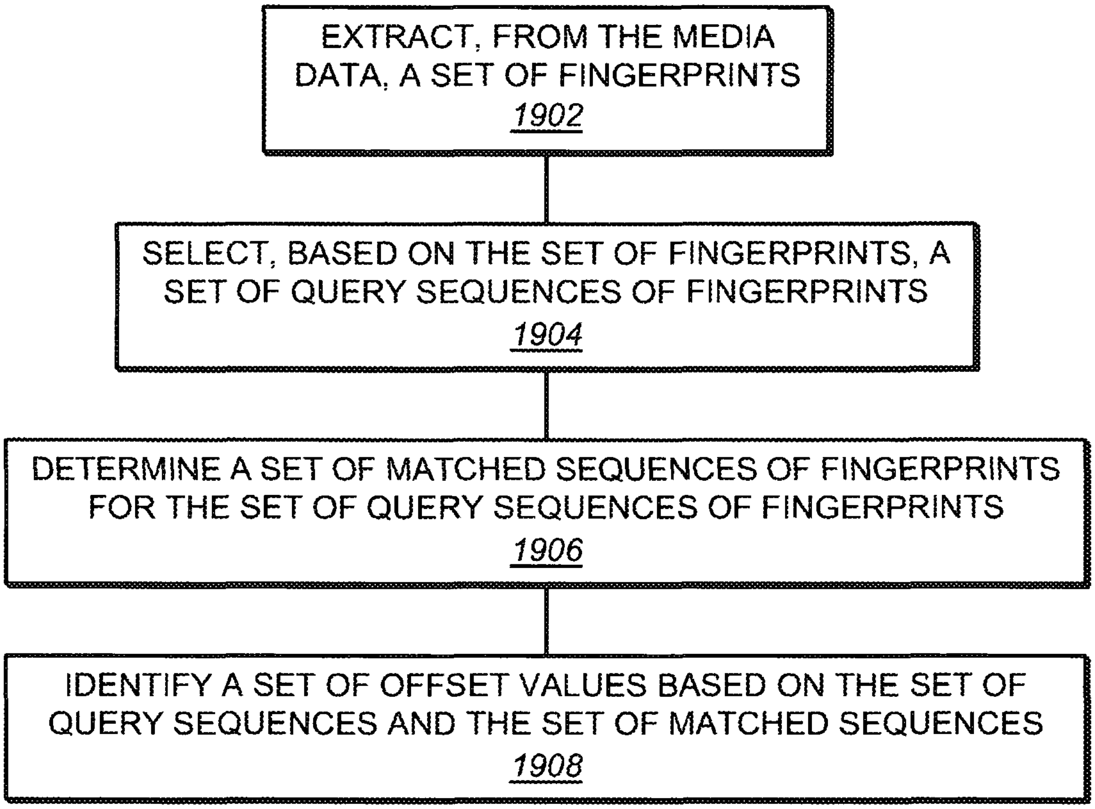


*FIG. 19A*

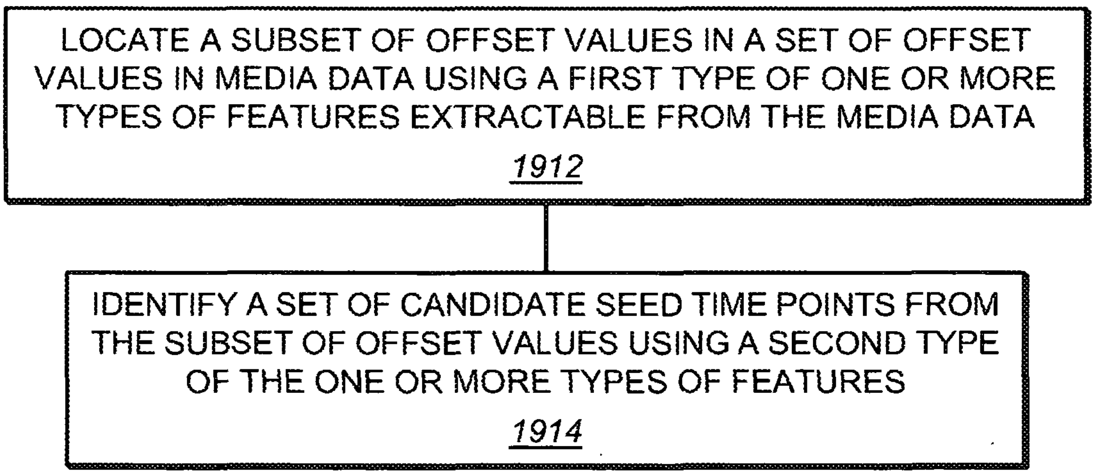


*FIG. 19B*

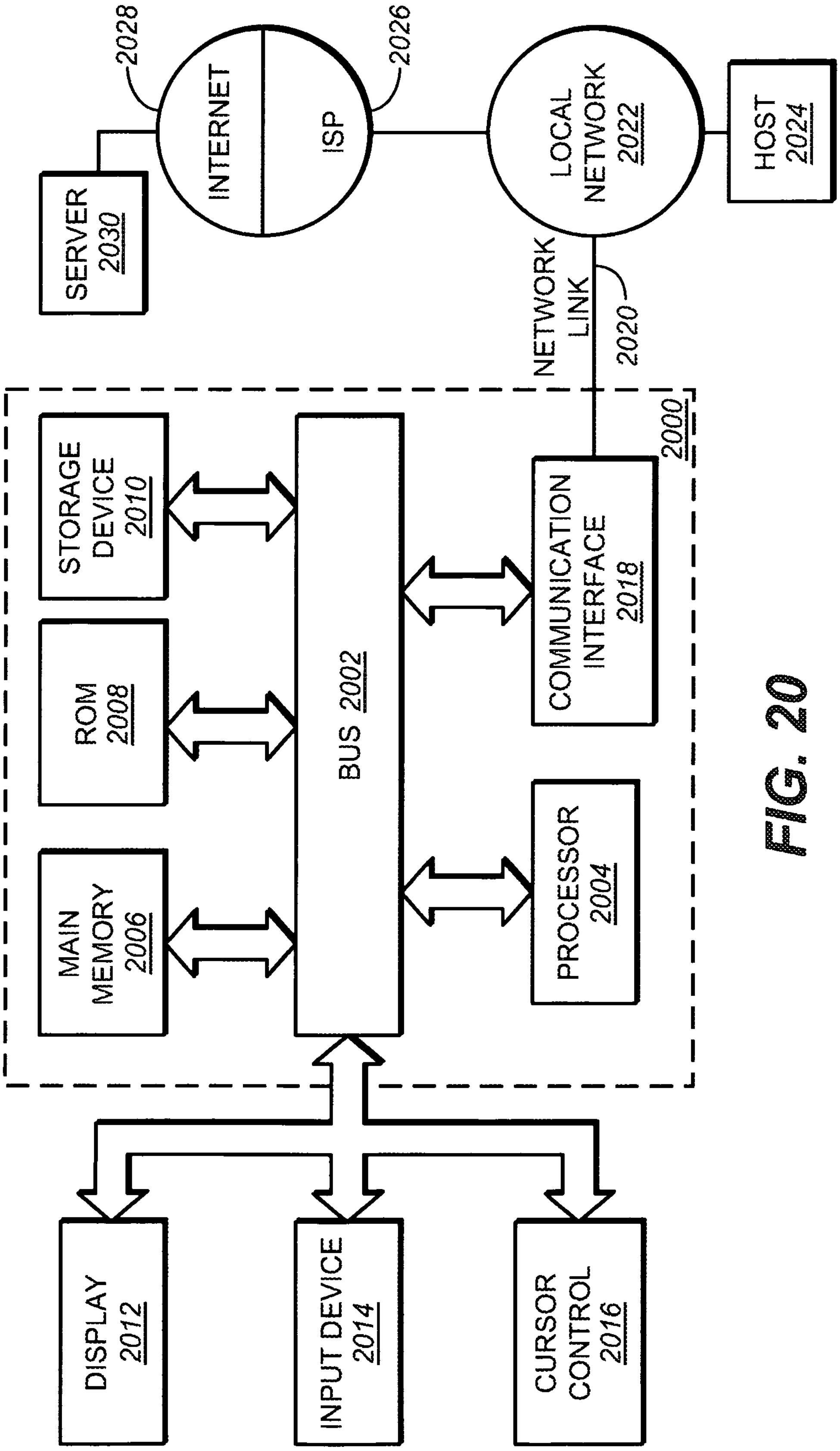
SERVER 2030
INTERNET
ISP
2028
2026
LOCAL NETWORK 2022
HOST 2024
NETWORK LINK 2020
STORAGE DEVICE 2010
ROM 2008
MAIN MEMORY 2006
BUS 2002
COMMUNICATION INTERFACE 2018
PROCESSOR 2004
2000
DISPLAY 2012
INPUT DEVICE 2014
CURSOR CONTROL 2016

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61428578 B
- US 61428588 B
- US 61428554 B
- US 61569591 B
- EP 2093753 A1


### Non-patent literature cited in the description


- **HOLLOSI, D. ; BISWAS, A.** Complexity Scalable Perceptual Tempo Estimation from HE-AAC Encoded Music. *128th AES Convention,* 22 May 2010